# EUROPEAN PATENT APPLICATION

(11) **EP 4 554 048 A1**
(43) Date of publication of application: **14.05.2025**
(21) Application number: 23835188.6
(22) Date of filing: 30.05.2023
(51) Int. Cl.: H02J 50/90, H02J 7/00, H02J 50/12

(54) **POWER TRANSMISSION DEVICE, CONTACTLESS POWER FEEDING SYSTEM, AND PROGRAM**

(30) Priority: 07.07.2022 JP 2022109644
(71) Applicant: DENSO CORPORATION, Kariya-city, Aichi 448-8661 (JP)
(72) Inventor: KANESAKI, Masaki, Kariya-city, Aichi 448-8661 (JP); TAKAHASHI, Masaya, Kariya-city, Aichi 448-8661 (JP); YAMAGUCHI, Nobuhisa, Kariya-city, Aichi 448-8661 (JP); OBAYASHI, Kazuyoshi, Kariya-city, Aichi 448-8661 (JP)
(74) Representative: TBK
(86) International application number: PCT/JP2023/020072
(87) International publication number: WO 2024/009652

(57) **Abstract**

A power transmission device (100) for wireless power supply to a mobile power receiving device (200) has an edge coil unit (120P) that includes an edge resonance circuit (110P), the edge resonance circuit including an edge coil (112P) and an edge resonance capacitors (116P); an edge current switching unit (124P); an edge transmission request signal receiving unit (172); an edge transmission control unit (174); an adjacent coil unit (120Q) that adjacent to the edge coil unit and includes an adjacent resonance circuit (110Q); the adjacent resonance circuit including an adjacent coil (112Q) and an adjacent resonance capacitor (116Q); and an adjacent current switching unit (124Q) for switching on and off state of the power supply from the power source to the adjacent resonance circuit; and an adjacent transmission control unit (182) that controls the on and off state of the power supply from the power source to the adjacent resonance circuit using the adjacent current switching unit.

## Description

### [CROSS-REFERENCING OF RELATED APPLICATIONS]

The present application claims priority to Japanese Application No. 2022-109644, filed on July 7, 2022. The contents of this application are incorporated herein by reference in their entirety.

### [TECHNICAL FIELD]

The present disclosure relates to a power transmission device, a wireless power transferring system and a program.

### [BACKGROUND ART]

A wireless power transmitting system with a plurality of power transmitting coils connected in parallel to a high-frequency power source and a power reception coil mounted on a mobile device is known (e.g., JP 2019071719A1). In this wireless power transmitting system, as a saturable reactor is placed between the high-frequency power source and each power transmitting coil, when the power transmitting coil and the power reception coil are in a facing state, a current flowing from the RF power source to the power transmitting coil becomes equal to or greater than the threshold value, and the impedance is reduced. On the other hand, when the power transmitting coil and the power reception coil are in a non-facing state, the current flowing from the RF power source to the power transmitting coil becomes less than the threshold value, and the impedance increases. As a result, the power supply to the power transmitting coil is suppressed.

### [SUMMARY OF INVENTION]

However, due to variations in a size and a shape of the power reception coil and a relative position of the power reception coil to the power transmitting coil, the change in magnetic flux generated in the power transmitting coil may be small even when the power reception coil changes from the non-facing state to the facing state relative to the power transmitting coil. In this case, the power transmitting coil and the power reception coil may not resonate, and the power transmission device may not start supplying power to the power receiving device.

This disclosure can be realized as the following forms

According to an embodiment of the present disclosure, a power transmission device for wireless power supply to a movable power receiving device is provided. This power transmission device includes an edge coil unit. The edge coil unit includes an edge resonance circuit, the edge resonance circuit including an edge coil and an edge resonance capacitor for parallel resonance of the edge coil, and an edge current switching unit for switching on and off state of power supply from a power source to the edge resonance circuit. This power transmission device further includes an edge transmission request signal receiving unit that receives an edge transmission request signal for initiating transmission by the edge coil unit, an edge transmission control unit that controls, in accordance with the edge transmission request signal, the on and off state of the power supply from the power source to the edge resonance circuit by the edge current switching unit, an adjacent coil unit that is disposed adjacent to the edge coil unit and includes: an adjacent resonance circuit, the adjacent resonance circuit including an adjacent coil and an adjacent resonance capacitor for parallel resonance of the adjacent coil; and an adjacent current switching unit for switching on and off state of the power supply from the power source to the adjacent resonance circuit, and an adjacent transmission control unit that controls the on and off state of the power supply from the power source to the adjacent resonance circuit using the adjacent current switching unit.

According to this aspect of the power transmission device, the on and off state of the power supply to the edge resonance circuit can be switched by receiving the edge transmission request signal. This prevents or minimizes the problem that the power transmission device does not start supplying power to the power receiving device when the power reception coil changes from the non-facing state to the facing state with respect to the edge coil. The present disclosure can also be realized in various forms other than power transmission device and wireless power transferring system. For example, it can be realized in the form of a coil unit, a wireless power transferring method, a control method for a power transmission device, a control method for a wireless power transferring system, a computer program realizing the control method, a non-transitory storage medium storing the computer program, etc. The control method can be realized in the form of a computer program that implements the control method, a non-transitory storage medium storing the computer program, etc.

### [BRIEF DESCRIPTION OF THE DRAWING]

The above and other objects, features and advantages of the present disclosure will become clearer with the following detailed description with reference to the accompanying drawings. The drawings are:
Fig. 1 illustrates the configuration of the power transmission device according to the first embodiment;
Fig. 2 illustrates the circuit configuration of the power transmission device;
Fig. 3 illustrates the circuit configuration of the edge coil unit;
Fig. 4 illustrates the circuit configuration of the edge coil unit according to another embodiment;
Fig. 5 illustrates the simulation results of the current value flowing in the adjacent coil unit;
Fig. 6 illustrates the power transmission device switching process;
Fig. 7 is a flowchart showing the processing routine for the transition process of the power transmission device to the standby state;
Fig. 8 is a flowchart showing the processing routine for the transition process of the power transmission device to the energized state;
Fig. 9 is a flowchart showing the processing routine of the edge coil energizing operation;
Fig. 10 is a flowchart showing the processing routine of the adjacent coil energizing operation;
Fig. 11 is a flowchart showing the processing routine for the transition of the power transmission device to the stopped state;
Fig. 12 is a first illustration of the relationship between the vehicle and the power transmission device while driving;
Fig. 13 is a second illustration of the relationship between the vehicle and the power transmission device while driving,
Fig. 14 is a third illustration of the relationship between the vehicle and the power transmission device while driving;
Fig. 15 is a fourth illustration of the relationship between the vehicle and the power transmission device while driving;
Fig. 16 is a fifth illustration of the relationship between the vehicle and the power transmission device while driving;
Fig. 17 is a sixth illustration of the relationship between the vehicle and the power transmission device while driving;
Fig. 18 illustrates the circuit configuration of the power transmission device according to second embodiment;
Fig. 19 is a flowchart showing the processing routine of the edge coil energizing operation according to the second embodiment;
Fig. 20 is a flowchart showing the processing routine of the adjacent coil energizing operation according to the second embodiment;
Fig. 21 is a flowchart showing the processing routine of the edge coil energizing operation according to the third embodiment;
Fig. 22 is a flowchart showing the processing routine of the adjacent coil energizing operation according to the third embodiment;
Fig. 23 is an illustration of the power transmission device according to the fourth embodiment;
Fig. 24 illustrates the circuit configuration of the edge coil unit according to the fourth embodiment;
Fig. 25 is a second illustration of the circuit configuration of the edge coil unit according to another embodiment;
Fig. 26 is a third illustration of the circuit configuration of the edge coil unit according to another embodiment;
Fig. 27 is a fourth illustration of the circuit configuration of the edge coil unit according to another embodiment;
Fig. 28 is a fifth illustration of the circuit configuration of the edge coil unit according to another embodiment;
Fig. 29 is a sixth illustration of the circuit configuration of the edge coil unit according to another embodiment;
Fig. 30 is the seventh illustration of the circuit configuration of the edge coil unit according to another embodiment.

### [DESCEIPTION OF EMBODIMENTS]

### A. First Embodiment:

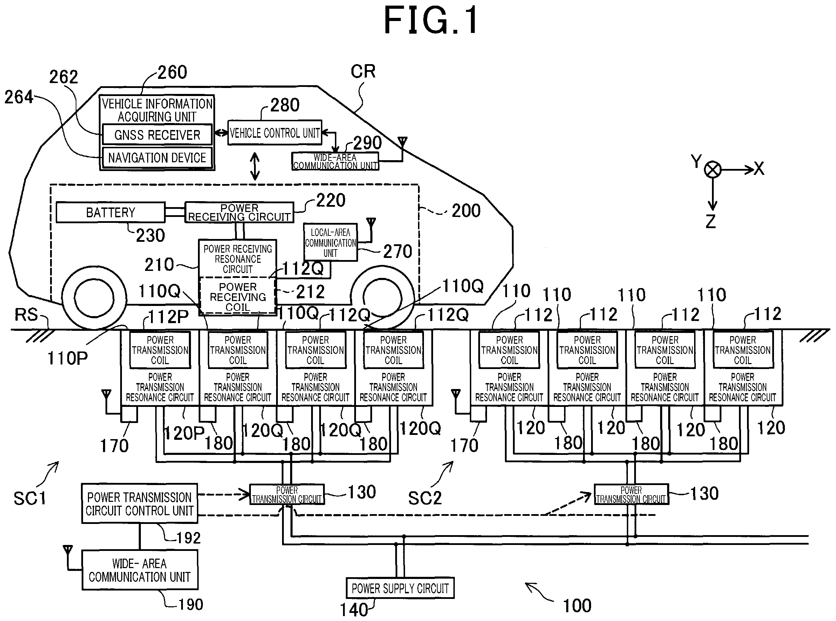

Figure 1 is a schematic diagram showing a wireless power transferring system with a power transmission device 100 according to the first embodiment of the present disclosure. The power transmission device 100 can supply power to the power receiving device 200 without contacting the power receiving device 200. The X, Y, and Z shown in Figure 1 and in the following figures represent three mutually orthogonal spatial axes. In this specification, the directions along these axes may be described as X-axis direction, Y-axis direction, and Z-axis direction. In the example in Figure 1, the X-axis direction coincides with a direction of travel of the vehicle CR along the lane of the vehicle travel path RS, the Y-axis direction coincides with a width direction of the vehicle travel path RS, and the Z-axis direction coincides with the gravity direction.

The power receiving device 200 can be mounted to various devices that operate using electric power, such as electronic devices, electric vehicles, etc. The power receiving device 200 is mobile and in this embodiment is mounted to a vehicle CR. The vehicle CR may be, for example, a vehicle equipped with a drive motor driven by electric power, such as an electric vehicle or a hybrid vehicle, etc. The power receiving device 200 includes a power receiving resonance circuit 210, a power receiving circuit 220, a battery 230, and a receiver's local-area communication unit 270.

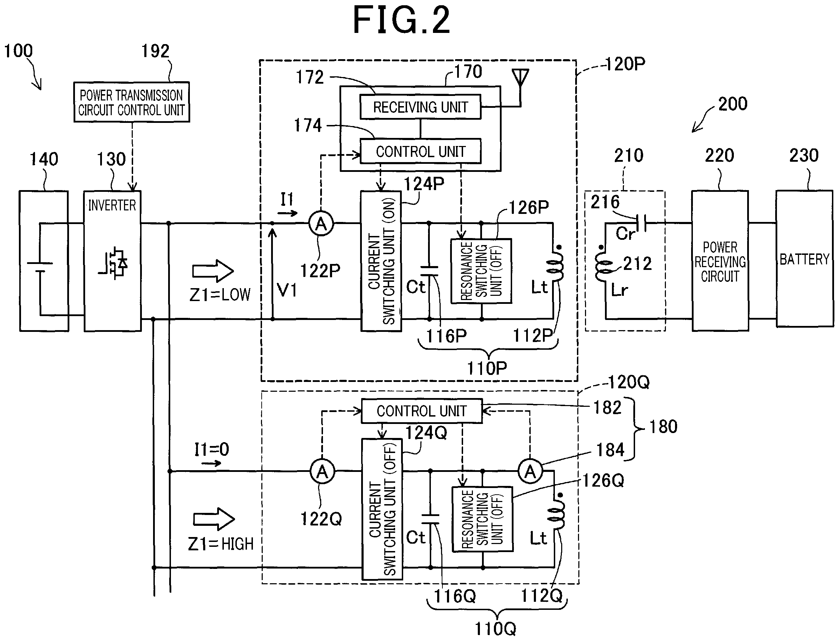

The power receiving resonance circuit 210 includes a power reception coil 212. The power reception coil 212 is installed at the bottom of the vehicle CR at a position that can face the power transmitting coil of the power transmission device 100. As shown on the right side of Figure 2, the power receiving resonance circuit 210 is a resonance circuit including the power reception coil 212 and a power receiving resonance capacitor 216 connected in series.

When the power reception coil 212 and the power transmitting coil are in a facing state, the power transmitting coil and the power reception coil 212 are electromagnetically coupled and resonate with the resonance circuit 210. When the power reception coil 212 and the power transmitting coil are in the resonance coupling state, the power receiving resonance circuit 210 receives power induced from the power transmission device 100 to power reception coil 212 without contact. The resonance coupling state is a magnetically coupled state. In Figure 2, the inductance of the power reception coil 212 is represented by Lr and the capacitance of the power receiving resonance capacitor 216 by Cr.

The power receiving circuit 220 converts the AC power output by the power receiving resonance circuit 210 into DC power. The DC power output by the power receiving circuit 220 is used to charge the battery 230. For example, battery 230 is a secondary battery that outputs DC power to drive a drive motor that is the driving source of vehicle CR. DC power supplied by power receiving circuit 220 can be used to drive the drive motor, charge an auxiliary motor (not shown in the figure), drive the auxiliary battery, and charge the battery and drive auxiliary equipment.

The receiver's local-area communication unit 270 functions as an edge transmission request signal transmitting unit. The edge transmission request signal transmitting unit transmits the edge transmission request signal to the power transmission device 100 by means of the local-area communication. In this disclosure, "local-area communication" means wireless communication with a communication distance of 5 meters or less. The communication distance of the local-area communication is preferred to be between 10 centimeters to 100 centimeters for improving identification of one vehicle CR with respect to multiple traveling vehicles, improving electromagnetic compatibility (EMC) of the power transmission device100, and suppressing unnecessary electricity consumption and generation of magnetic flux between the power transmission device100 and the power receiving device 200 in a non-facing state.

The "edge transmission request signal" is a control signal used to switch the edge coil unit 120P of the power transmission device 100 to an energized state, as described below. The edge coil unit 120P can transmit power in the energized state. In this embodiment, the edge transmission request signal can include location information and identification information of the vehicle CR. The "location information of the vehicle CR included in the edge transmission request signal" can include the detected location information when the vehicle CR is detected to be within a predetermined distance from the edge transmission control device 170 due to the establishment of the local-area communication between the receiver's local-area communication unit 270 and the edge transmission control device 170. Not only this, but the location information of the vehicle CR included in the edge transmission request signal may include an absolute location of the vehicle CR and information on the relative location of the vehicle CR to the power transmission device 100.

The "identification information" is the identification information of the power receiving device 200 or the vehicle CR equipped with the power receiving device 200. The "identification information" can be, but is not limited to, the identification information of the power reception coil 212 included in the power receiving device 200, the identification information of the user of the power receiving device 200, or a combination of these multiple pieces of information. It can also be a combination of these pieces of information, or various other information associated with them.

In this embodiment, the receiver's local-area communication unit 270 is an active type of RF-ID (Radio Frequency-Identification) tag that uses the 900 MHz or 2.45 GHz band radio system. In the following explanation, the RF-ID tag may be referred to as "RF tag. The receiver's local-area communication unit 270 may be a passive RF tag. The receiver's local-area communication unit 270 may be an electromagnetic induction RF tag instead of a radio wave type. The receiver's local-area communication unit 270 may communicate using a short-range wireless communication technology that uses a loop antenna instead of an RF-ID tag, a short-range wireless communication technology that applies orthogonal frequency-division multiplexing (Wavelet OFDM), which is a frequency-division multiplexing method using magnetic fields, or a 5.8 GHz communication method, such as DSRC (Dedicated Short-Range Communication).

As shown in Figure 1, in this embodiment, the vehicle CR further includes a vehicle information acquiring unit 260, a vehicle control unit 280, and a receiver's wide-area communication unit 290. The vehicle control unit 280 is a circuit that includes a CPU and a memory. The vehicle control unit 280 performs various controls for the operation of the vehicle CR and performs for both an automatic driving and a manual driving. The memory stores various programs to realize the functions provided in this embodiment, and the vehicle control unit 280 performs the functions of the vehicle information acquiring unit 260 and the vehicle control unit 280, respectively, by executing the computer programs stored in the memory by the CPU. Some of the functions of the vehicle control unit280 may be realized by hardware circuits.

The vehicle information acquiring unit 260 acquires various support information related to the wireless power transferring system and vehicle CR driving. The GNSS receiver 262 derives the current position (longitude and latitude) of the vehicle CR based on navigation signals received from satellites that constitute the Global Navigation Satellite System (GNSS). The navigation device 264 has a function to determine a planned travel route based on the destination and the position of the vehicle CR detected by the GNSS receiver 262. In addition to the GNSS receiver 262, other sensors, such as a gyro, may be utilized to determine or modify the planned travel route.

The receiver's wide-area communication unit 290 performs wide-area communication to apply for a reservation to use the power transmission device 100. "Wide-area communication" is a wireless communication in which the communication distance is greater than that of the local-area communication. The wide-area communication can be realized, for example, by mobile communication systems such as the fifth-generation mobile communication systems (5G, Local 5G), the fourth-generation mobile communication systems (LTE-Advanced, 4G), LTE, the wireless local area networks (LAN) compliant with IEEE802.11 standards, or wireless communication using Bluetooth (registered trademark), etc. Wireless communication between the transmission device 100 and the receiver's wide-area communication unit 290 may include indirect wireless communication through base stations and servers.

The receiver's wide-area communication unit 290 transmits, to the power transmission device100, the information necessary for the application for reservation of use of the power transmission device100, such as the location of the vehicle CR, the route to be traveled, and the identification information of the vehicle CR. The identification information of the vehicle CR transmitted by the receiver's wide-area communication unit 290 is the same information as the identification information transmitted by the receiver's local-area communication unit 270, for the purpose of matching.

As shown in Figure 1, power transmission device 100 includes a plurality of coil units 120P and 120Q, a transmission circuit 130, and a power supply circuit 140. In this embodiment, the plurality of coil units 120P and 120Q, the transmission circuit 130, and the power supply circuit 140 are embedded within the vehicle travel way RS. The plurality of coil units 120P and 120Q, the transmission circuit 130, and the power supply circuit 140 may be exposed on the vehicle travel way RS. The power supply circuit 140 may be located, for example, on a side road, and may be located on the vehicle travel way RS at a position that is not detrimental to the travel of the vehicle CR.

The power supply circuit 140 may be, for example, an AC/DC converter circuit. The power supply circuit 140 converts AC power from an AC power source, such as a system power source, to DC power and supplies it to the transmission circuit130.The transmission circuit130 includes an inverter or the like that converts DC power supplied from the power supply circuit140 to AC power with an operating frequency and supplies it to the plurality of coil units 120P and coil units120Q. The transmission circuit 130 may include rectification circuits and filter circuits.

The plurality of coil units 120P and 120Q and one of the transmission circuit 130 form one transmission area SC1 in a straight line section along the vehicle travel path RS. In Figure 1, a transmission area SC2 similarly configured to the transmission area SC1 is further provided at a predetermined distance away from the transmission area SC1. In Figure 1, one power supply circuit 140 is provided for both transmission area SC1 and transmission area SC2, but different power supply circuits may be provided for transmission area SC1 and transmission area SC2.

The plurality of coil units 120P and 120Q include an edge coil unit 120P and an adjacent coil unit 120Q. The edge coil unit 120P is positioned at an edge of the transmission area SC1. "The coil unit positioned at the edge of the transmission area SC1" means that among the coil units located at two edges on the array in the multiple coil units forming the transmission area SC1, the one which the power reception coil 212 of the power receiving device 200 may first be in a facing state with, when the power receiving device 200 enters the transmission area SC1. In Figure 1, among the four coil units included in transmission area SC1, the power receiving device 120P may first be in a facing state with the power receiving device 200 when the vehicle CR traveling in the X-axis direction. Instead, "The coil unit positioned at the edge of the transmission area SC1" may be multiple coil units. For example, when the power receiving device 200 can enter the transmission area SC1 from multiple directions, such as the case that the transmission area SC1 is located at an intersection, "the coil unit locates at an edge of the transmission area SC1" includes the respective coil unit that could be the first facing state for each direction of entry when the power receiving device 200 enters from each direction.

The adjacent coil unit 120Q is a coil unit adjacent to the edge coil unit 120P. "The coil unit adjacent to the edge coil unit 120P" includes the coil unit directly adjacent to the edge coil unit 120P and the coil unit positioned consecutively to the coil unit directly adjacent to the edge coil unit 120P, when multiple coil units are included in the transmission area SC1. In Figure 1, all coil units other than the leftmost edge coil unit 120P in the transmission area SC1 fall are the adjacent coil unit 120Q.

In Figure 1, the edge coil 112P and the plurality of adjacent coils 112Q are in contact with each other, but they do not necessarily have to be in contact with each other, and there may be a gap between them. However, it is preferable that the edge coil 112P and the plurality of adjacent coils 112Q be in contact with each other to facilitate power supply to the power reception coil 212 while the vehicle CR is running. When there is a gap between the edge coil 112P and the plurality of adjacent coils 112Q, the distance of the gap should be, for example, less than half the width of the edge coil 112P and the plurality of adj acent coils 112Q (or the radius thereof if they are circular).

As shown in Figure 2, the edge coil unit 120P includes an edge resonance circuit 110P, an edge current sensor 122P, and an edge current switching unit 124P. The edge current switching unit 124P is positioned between the transmission circuit 130 and the edge resonance circuit 110P and switches on and off state of the power supply from the transmission circuit 130 to the edge resonance circuit 110P. The edge current sensor 122P detects the current value of the power supplied from the transmission circuit 130 to the edge resonance circuit 110P (hereinafter referred to as "edge current value"). Instead of or together with the edge current sensor 122P, a shunt resistor, for example, or a relatively small inductance, such as a wiring inductance, may be placed. A sensor that detects the voltage generated by the current flow may be provided instead of or together with the edge current sensor 122P.

The edge resonance circuit 110P includes an edge coil 112P and an edge resonance capacitor 116P. The edge resonance circuit 110P transmits the power induced by the edge coil 112Pto the receiving resonance circuit 210 using the electromagnetic induction phenomenon.

As shown in Figure 2, the edge resonance circuit 110P is a parallel resonance circuit in which the edge coil 112P and the edge resonance capacitor 116P are connected in parallel. In this embodiment, the primary parallel secondary series method (called the "PS method") is applied to the 110P edge resonance circuit. The edge resonance capacitor 116P resonates the power supplied to the edge coil 112P. Figure 2 shows a facing state in which the edge coil 112P and the power reception coil 212 of the power receiving device 200 face each other. In the facing state, the power reception coil 212 is electromagnetically coupled to the edge coil 112P.

The capacitance Ct of the edge resonance capacitor 116P and the inductance Lt of the edge coil 112P are set so that the edge resonance circuit 110P resonates in parallel in the facing state. In the facing state, the edge resonance circuit 110P and the power receiving resonance circuit 210 are electromagnetically coupled, and in the equivalent circuit, the battery 230 as the secondary load is connected in parallel to the edge resonance circuit 110P. The input impedance Z1 of the edge resonance circuit 110P seen from the power source becomes smaller than the non-resonance state. As a result, AC power is supplied from the transmission circuit 130 to the edge coil 112P, and AC power is supplied to the power receiving device 200 via the power reception coil 212.

In this embodiment, the edge coil unit 120P further includes an edge resonance switching unit 126P and an edge transmission control device 170. The edge resonance switching unit 126P is controlled by the edge transmission control device 170. The edge resonance switching unit 126P switches the state of the edge coil 112P and the edge resonance capacitor 116P between the resonance state and the non-resonance state by changing the impedance of the edge coil 112P and the edge resonance capacitor 116P.

The adjacent coil unit 120Q includes an adjacent resonance circuit 110Q and an adjacent current switching unit 124Q. The adjacent current switching unit 124Q is positioned between the transmission circuit 130 and the adjacent resonance circuit 110Q and switches on and off state of the power supply from the transmission circuit 130 to the adjacent resonance circuit 110Q. The adjacent current sensor 122Q switches the current value of the power supplied from the transmission circuit 130 to the adjacent resonance circuit 110Q (hereinafter referred to as "adjacent current value"). The configuration of the adjacent current sensor 122Q is similar to that of the edge current sensor 122P. Instead of or together with the edge current sensor 122Q, a shunt resistor, for example, or a relatively small inductance, such as a wiring inductance, may be placed. A sensor that detects the voltage generated by the current flow may be provided instead of or together with the edge current sensor 122Q.

The adjacent resonance circuit 110Q includes an adjacent coil 112Q and an adjacent resonance capacitor 116Q. AC power induced by the adjacent coil 112Q is transmitted to the power receiving resonance circuit 210. As shown in Figure 1, the edge resonance circuit 110P and the plurality of adjacent resonance circuits 110Q are continuously laid in a straight line along the direction of travel (X axis direction) of the vehicle CR in the vehicle travel path RS.

Figure 2 shows a non-facing state in which the adjacent coil 112Q and the power reception coil 212 do not face each other. In the non-facing state, the power reception coil 212 is not electromagnetically coupled to the adjacent coil 112Q, and the resonance state of the adjacent resonance circuit 110Q collapses. As a result, the input impedance Z1 of the adjacent resonance circuit 110Q becomes a high-impedance state with asubstantially infinity, and the input current I1 of the adjacent resonance circuit 110Q can be brought close to zero. Thus, according to the edge resonance circuit 110P and the adjacent resonance circuit 110Q using parallel resonance circuits, the current from the transmission circuit 130, i.e., the standby power, can be suppressed compared to a resonance circuit using a series resonance circuit.

In this embodiment, the adjacent coil unit 120Q further includes an adjacent resonance switching unit 126Q and an adjacent transmission control device 180. The adjacent resonance switching unit 126Q is controlled by the adjacent transmission control device 180. The adjacent resonance switching unit 126Q, by changing the impedance of the adjacent coil 112Q and the adjacent resonance capacitor 116Q, switches the state of the adjacent coil 112Q and the adjacent resonance capacitor 116Q between the resonance state and non-resonance state.

The adjacent transmission control device 180 includes an adjacent transmission control unit 182 and an adjacent coil characteristic detecting unit 184. The coil characteristic detecting unit 184 detects the electrical characteristic value of adjacent coil 112Q. The "electrical characteristic value of the adjacent coil 112Q" includes, for example, the voltage applied to the adjacent coil 112Q, the current flowing through the adjacent coil 112Q, and the magnetic field generated in the adjacent coil 112Q. In this embodiment, as shown in Figure 2, the adjacent coil characteristic detecting unit 184 measures the current value flowing in the adjacent coil 112Q as the electrical characteristic value.

The adjacent transmission control unit 182 has a CPU and a memory and controls the on and off state of the adjacent current switching unit 124Q and the adjacent resonance switching unit 126Q. In this embodiment, the adjacent transmission control unit 182, based on the electrical characteristic value of the adjacent coil 112Q acquired by the adjacent coil characteristic detecting unit 184Q (current value in this embodiment), controls the on-state of the adjacent current switching unit 124Q and the adjacent resonance switching unit 126Q.

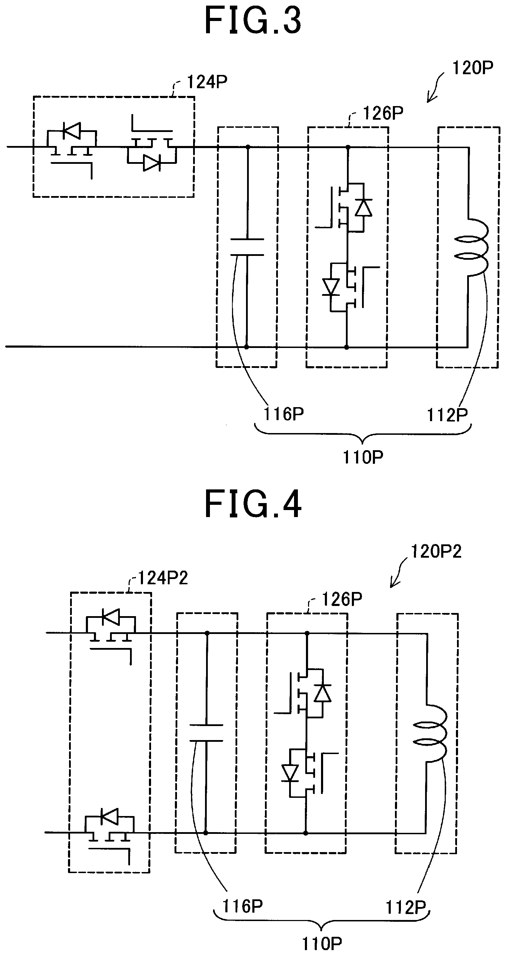

As shown in Figure 3, each of the edge current switching unit 124P and the edge resonance switching unit 126P may be a semiconductor device for controlling current, such as an IGBT, MOSFET, or FET, for example. Here, the saturable reactor has the problem that the edge current switching unit 124P is large because the inductance needs to be large to increase the impedance. In addition, since the saturable reactor can become a large inductance component to increase the impedance, the inductance component of the saturable reactor becomes dominant in the load viewed from the transmission circuit 130. According to the power transmission device 100 of this embodiment, the use of a semiconductor element in the edge current switching unit 124P allows the saturable reactor inductance to be dominant in the load viewed from the transmission circuit 130. According to the power transmission device 100 of this embodiment, by using a semiconductor element in the edge current switching unit 124P, the resonance characteristics of the edge resonance circuit 110P can be improved compared to the case where a saturable reactor is used.

As shown in Figure 3, each of the edge current switching unit 124P and the edge resonance switching unit 126P is a two-way switch using AC power semiconductor devices. The edge resonance switching unit 126P is positioned between the edge resonance capacitor 116P and the edge coil 112P and is connected in parallel to edge coil 112P. The edge transmission control unit 174 closes (turns on) the edge resonance switching unit 126P and puts the edge coil 112P the and edge resonance capacitor 116P in the non-resonance state. The edge transmission control unit 174 opens (turns off) the edge resonance switching unit 126P and puts the edge coil 112P the and edge resonance capacitor 116P in the resonance state. In Figure 3, the edge current switching unit 124P and the edge resonance switching unit 126P are explained as examples. regarding the switching unit126Q, except that it is controlled by the adjacent transmission control unit182 instead of the edge transmission control unit174, the explanation is omitted as it has a similar configuration as the switching unit 126P.

The edge transmission control unit 174 activates the power supply from the transmission circuit 130 to the edge resonance circuit 110P by closing (turning on) the edge current switching unit 124P and suspends the power supply from the transmission circuit 130 to the edge resonance circuit 110P by opening (turning off) the edge current switching unit 124P. In Figure 3, the edge current switching unit 124P, which is a two-way switch, is located only on the positive pole side between the transmission circuit 130 and the edge resonance circuit 110P. However, as in the edge coil unit 120P2 shown in Figure 4, an edge current switching unit 124P2 may be used, in which the two-way switches are arranged separately on the positive and negative pole sides. According to the power transmission device 100 configured in this way, the so-called common mode noise generated on the positive pole side and the negative pole side can be suppressed by separating the cutoff point of the power supply from the transmission circuit 130 to the edge resonance circuit 110P into the positive pole side and the negative pole side. This allows the suppression or prevention of so-called common mode noise generated on both the positive and negative electrode sides.

As shown in Figure 1, in this embodiment, the power transmission device 100 further includes a transmitter's wide-area communication unit 190, a transmission circuit control unit 192, and the edge transmission control device 170. The transmitter's wide-area communication unit 190 receives the request for reservation to use the vehicle CR by means of the wide-area communication. The information acquired by the transmitter's wide-area communication unit 190 is output to the transmission circuit control unit 192. The transmission circuit control unit 192 is a circuit including a CPU and memory. The transmission circuit control unit 192 controls the transmission circuit 130 based on information received from the vehicle CR via the transmitter's wide-area communication unit 190 and switches the state of the power transmission device 100 between standby and stationary. The "stationary state of the power transmission device 100" is a state in which the power supply from transmission circuit 130 to edge resonance circuit 110P is stopped by the transmission circuit 130 being driven. The "standby state of power transmission device 100" is a state in which the transmission circuit 130 is driven but power is not supplied from the transmission circuit 130 to the power receiving device 200.

The edge transmission control device 170 receives the edge transmission request signal transmitted from the receiver's local-area communication unit 270 by means of the local-area communication and changes the input impedance Z1 of the edge resonance circuit 110P based on the received edge transmission request signal. As shown in Figure 2, the edge transmission control device 170 includes an edge transmission request signal receiving unit 172 and an edge transmission control unit 174.

The edge transmission request signal receiving unit 172 acquires the edge transmission request signals, etc., transmitted from the receiver's local-area communication unit 270. The edge transmission request signal receiving unit 172 may be, for example, a receiver or a reader corresponding to the wireless communication method used for the receiver's local-area communication unit 270. In this embodiment, the edge transmission request signal receiving unit 172 is an RF reader capable of recognizing RF tags. However, the edge transmission request signal receiving unit 172 can also be a receiver corresponding to the communication method using a magnetic field with a loop antenna as described above.

The edge transmission control unit 174 is a circuit for switching the current value flowing in the edge resonance circuit 110P. Specifically, the edge transmission control unit 174, when the edge transmission request signal receiving unit 172 acquires the transmission request signal from the receiver's local-area communication unit 270, switches the edge current switching unit 124P and the edge resonance switching unit 126P provided in the edge resonance circuit 110P, changes the input impedance Z1 of the edge resonance circuit110P, and make the current value flowing in the edge coil112P the current value that can supply power to the power receiving device200. In this embodiment, the edge transmission control unit 174 is, for example, positioned at the center of the coil of the edge coil 112P and is integrally installed with the edge coil 112P.

As shown in Figure 2, in this embodiment, the edge transmission control device 170 is included in the edge coil unit 120P of the transmission area SC1. However, the edge transmission control device 170 must be included in the power transmission device 100, may be part of the adjacent coil unit 120Q, may be positioned at any position different from the edge coil unit 120P or the adjacent, and may be positioned at any location different from the edge coil unit 120P or the adjacent coil unit 120Q. For example, the edge transmission control device 170 may be positioned inside the vehicle travel path RS or on the vehicle travel path RS. To improve the identification of the vehicle CR and to improve the electromagnetic compatibility (EMC) of the power transmission device 100, it is desirable to be able to detect the proximity of vehicle CR to the edge coil 112P with high accuracy. Therefore, it is preferable that the edge transmission request signal receiving unit 172 is positioned close to the edge coil 112P. It is further preferable that the coordinates of the edge transmission request signal receiving unit 172 and the edge coil 112P overlap each other in plain view, for example, the edge transmission request signal receiving unit 172 is positioned in the coil plane of the edge coil 112P.

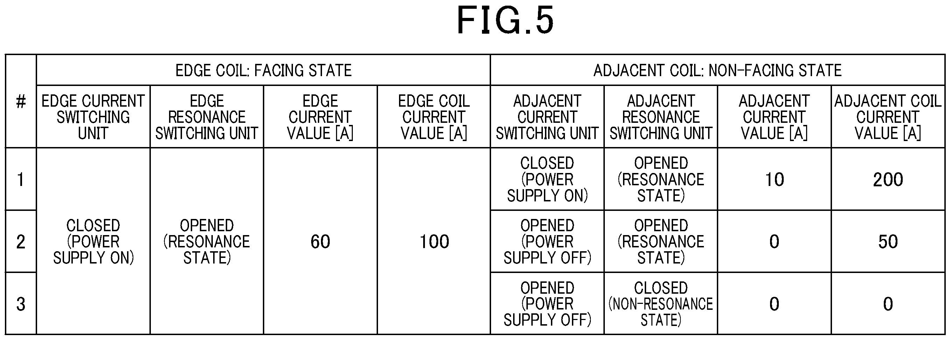

Figure 5 shows the simulation results using the wireless power transferring system for this embodiment. More specifically, it shows the current value and the current value of the coil current flowing in adjacent coil 112Q (hereinafter referred to as "adjacent coil current"), when the edge coil 112P is in a facing state with the power reception coil 212 and the adjacent coil 112Q is in a non-facing state and the adjacent current switching unit 124Q and the adjacent resonance switching unit 126Q are closed (on) or opened (off). As the left part of Figure 5 shows, when the edge coil 112P is in the facing state, the edge current switching unit 124P is closed (turned on) and the power is supplied from the transmission circuit 130 to the edge coil unit 120P, and the edge current switching unit 124P is opened (turned off) and the power is not supplied from the transmission circuit 130 to the edge coil unit 120P. According to the simulation results, as the left part of Figure 5 shows, the edge current value is about 60 A, and the current value of the coil current flowing in the edge coil (hereinafter referred to as "edge coil current value") is about 100 A.

As the upper-right part of Figure 5 shows, when the adjacent coil 112Q is in a non-facing state, the adjacent current switching unit 124Q is closed (turned on) and the power supply from the transmission circuit 130 to the adjacent coil unit 120Q is on, and the adjacent resonance switching unit 126Q is opened (turned off) and adjacent coil 112Q and adjacent resonance capacitor 116Q are in a resonance state, the adjacent current value is 10 A, and the adjacent coil current value is 200 A. This means that even when the adjacent coil unit 120Q is not contributing to the power transmission to the power receiving device 200, if the power supply to the adjacent coil unit 120Q is on and in the resonance state, current flows from the transmission circuit 130 to the adjacent coil unit 120Q and the coil current in the non-facing state (hereinafter also referred to as "standby current") flows , resulting in extra power loss.

As the middle-right part of Figure 5 shows, when the adjacent coil 112Q is in a non-facing state, the adjacent current switching unit 124Q is opened (turned off) and the power supply from the transmission circuit 130 to the adjacent coil unit 120Q is off, and the adjacent resonance switching unit 126Q is opened (turned off) and adjacent coil 112Q and adjacent resonance capacitor 116Q are in a resonance state, the adjacent current value is 0 A, and the adjacent coil current value is 50 A. According to the simulation results, the power supply from the transmission circuit 130 to the adjacent coil unit 120Q can be reduced to zero and reduce the standby current by turning off the adjacent current switching unit 124Q, comparing to the simulation result shown in the upper-right part of Figure 5.

As the lower-right part of Figure 5 shows, when the adjacent coil 112Q is in a non-facing state, the adjacent current switching unit 124Q is opened (turned off) and the power supply from the transmission circuit 130 to the adjacent coil unit 120Q is off, and the adjacent resonance switching unit 126Q is closed (turned on) and adjacent coil 112Q and adjacent resonance capacitor 116Q are in a non-resonance state, and the adjacent current value and the adjacent coil current value are approximately 0A. According to the simulation results, in the non-facing state, when the adjacent current switching unit 124Q is opened (turned off) and the adjacent resonance switching unit 126Q is closed (turned on) the power supply to the adjacent coil unit 120Q and the standby current can be reduced to zero.

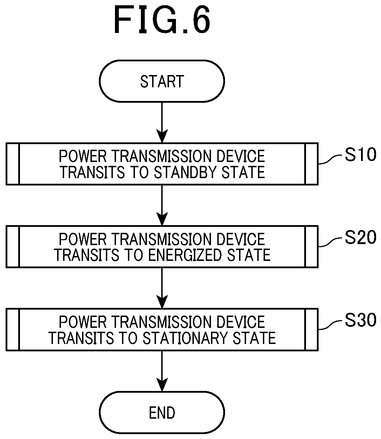

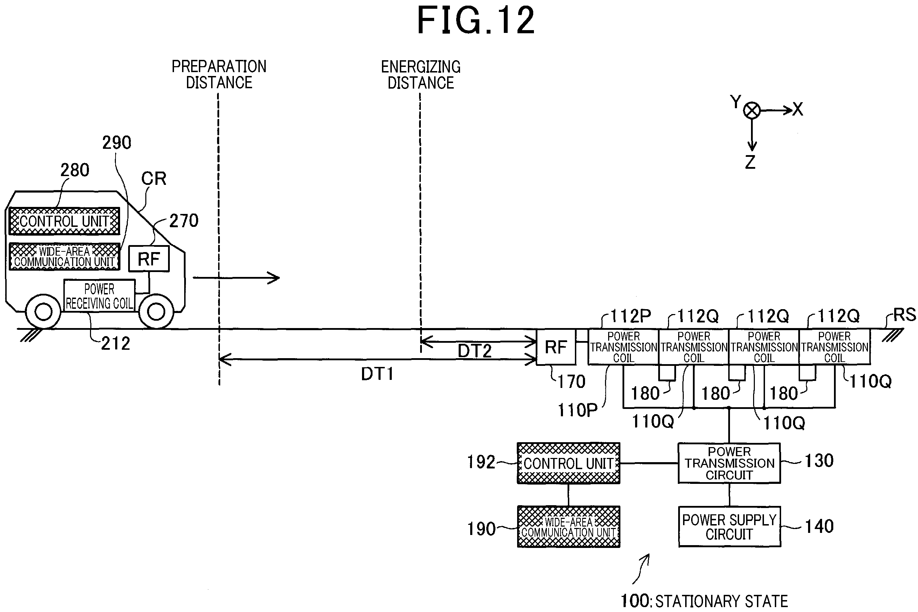

Figures 6 to 17 are used to describe the power transferring process performed by the power transmission device 100 of this embodiment. In Figures 12 to 17, the vehicle CR equipped with power receiving device 200 is shown driving toward and passing through transmission area SC1 of power transmission device 100. For convenience of illustration, the edge transmission control device 170 is shown separated from the edge coil 112P in Figs. 12 to 17, but in reality, the coordinates of the edge coil 112P and the edge transmission control device 170 are coincident with each other in plain view. In Figures 12 to 17, portions with active functions are hatched to facilitate understanding of the technology. Also, in Figures 12 to 17, the names of some components are abbreviated for convenience of illustration.

Figures 12 to 17 schematically show a start energizing distance DT2 from edge coil 112P of power transmission device 100 and a preparation distance DT1 from edge coil 112P. The start energizing distanceDT2 is, for example, set based on the distance between the receiver's local-area communication unit 270 and the edge transmission control device 170's edge. In this embodiment, the start energizing distanceDT2 is set at 100 cm which is the communication distance of the receiver's local-area communication unit270. The preparation distance DT1 is longer than the start energizing distanceDT2 and defines the area for transitioning the power transmission device 100 to the ready state upon entry of the vehicle CR. It is necessary that during the vehicle CR travels after subtracting the start energizing distance DT2 from the preparation distance DT1 (DT1-DT2), the transmission circuit 130 is transitioned to the standby state. For example, the preparation distance DT1 may be derived from the time required to transition the transmission circuit 130 to the ready state, the separation distance between the vehicle CR and the power transmission device 100, and the driving speed of the vehicle CR.

As shown in Figure 6, in the power supply process from the power transmission device 100 to the power receiving device 200, in step S10, the power transmission device 100 in the stationary state transitions to the standby state. In the standby state and the stationary state of the power transmission device 100, the edge current switching unit 124P and the adjacent current switching unit 124Q are opened (turned off), the edge resonance switching unit 126P and the edge resonance switching unit 126P are closed (turned on).

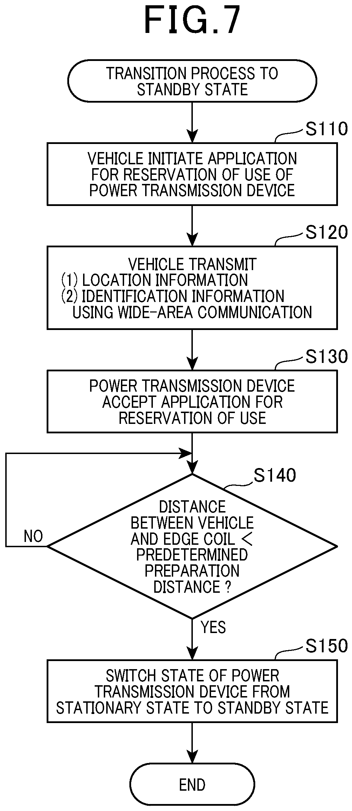

As shown in Figure 7, in step S110, the vehicle CR initiates the application for the reservation of use of the power transmission device 100. The reservation of the use of the power transmission device 100 means applying to the power transmission device 100 or the administrator of power transmission device 100 for supplying power to the power receiving device 200 by the power transmission device 100. For example, the vehicle control unit 280 may apply for the reservation for use of the power transmission device 100 upon acquiring information from the vehicle information acquiring unit 260 that the transmission area SC1 is included in the planned route generated by the navigation device 264. Alternatively, regardless of whether the vehicle CR has applied for the reservation, the vehicle CR's location information transmitted to the power transmission device 100 via the receiver's wide-area communication unit 290 from the vehicle CR may be used to apply for reservation of usage of the power transmission device 100. In this case, the power transmission device 100 may accept the application for the reservation when the power transmission device 100 detects the vehicle CR is within a predetermined range from the power transmission device 100 using the vehicle CR's location information. The vehicle control unit 280 may apply for the reservation for use of the power transmission device 100 according to the state of charge of the battery 230, for example, by detecting the low SOC state of the battery 230.

When the application for reservation of use of the power transmission device 100 is initiated, as shown in Figure 12, in step S120, the vehicle control unit 280 of the vehicle CR transmits the location information of the vehicle CR and the identification information of the vehicle CR together with the application for the reservation of use of the power transmission device 100 to the transmitter's wide-area communication unit 190. This information may be transmitted periodically at predetermined times after the start of the application. The location information of the vehicle CR transmitted by the wide-area communication is the current location information of the vehicle CR acquires by the GNSS receiver 262 or navigation device 264. However, the location information of the vehicle CR transmitted by the wide-area communication is not limited to only location information such as coordinates, but also includes the detected location information when the vehicle CR is detected to be within a predetermined distance from the transmitter's wide-area communication unit 190 due to the establishment of the wide-area communication between the receiver's wide-area communication unit 290 and transmitter's wide-area communication unit 190.

In step S130, when the transmitter's wide-area communication unit 190 of the power transmission device 100 acquires the location information of the vehicle CR and the identification information of the vehicle CR, the transmission circuit control unit 192 accepts the application for the reservation of use of the power transmission device 100 by the vehicle CR and stores the acquired identification information of the vehicle CR in the memory of the edge transmission control unit 174, for example.

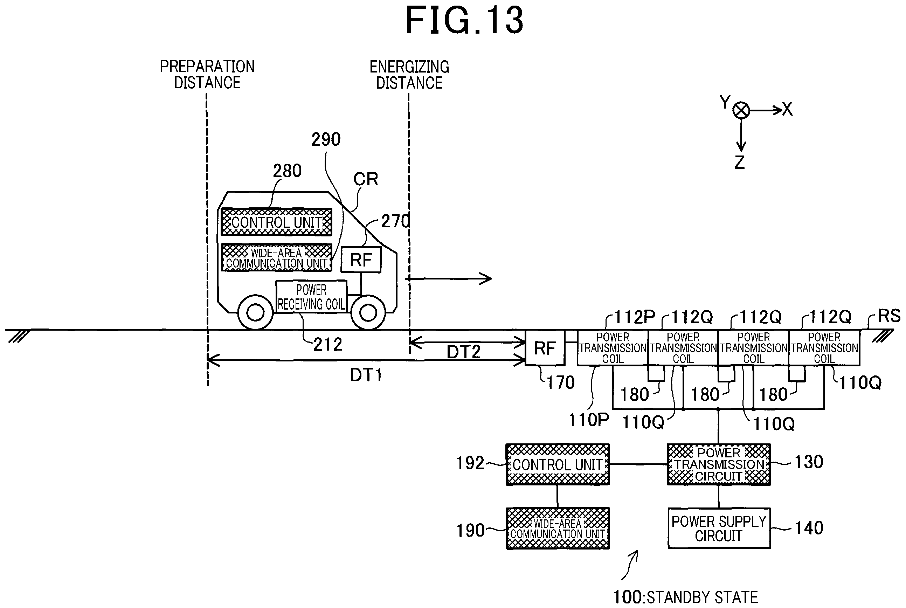

In step S140, the transmission circuit control unit 192 determines whether the vehicle CR has reached the range from the edge coil 112P to the preparation distance DT1 based on the acquired location information of the vehicle CR. When the distance from the edge coil 112P to the vehicle CR is equal to or longer than the preparation distance DT1 (S140: NO), the transmission circuit control unit 192 continues to acquire the location information of the vehicle CR and waits until the vehicle CR reaches the range from the edge coil 112P to the preparation distance DT1. When the distance from the edge coil 112P is shorter than the preparation distance DT1 (S140: YES), the transmission circuit control unit 192 proceeds to step S150, switches the state of the power transmission device 100 from the stationary state to the standby state by driving the transmission circuit 130, as shown in Figure 13, and complete the process.

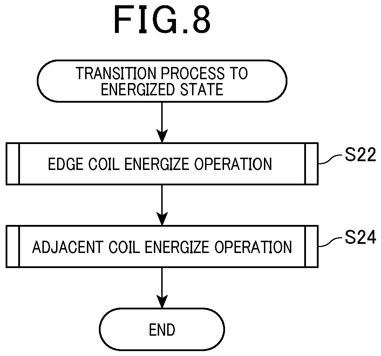

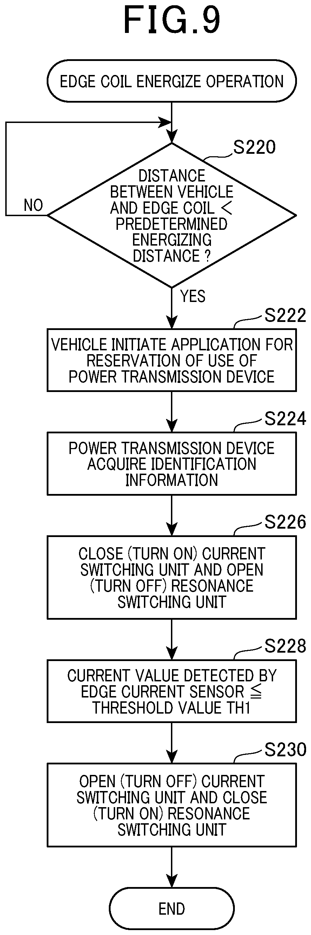

Returning to Figure 6, in step S20, the power transmission device 100 in the standby state transitions to the energized state. More specifically, as shown in Figure 8, in step S22, an edge coil energizing operation is performed, and in step S24, an adjacent coil energizing operation is performed. As shown in Figure 9, in the edge coil energizing operation, in step S220, the edge transmission control unit 174 determines whether the vehicle CR has reached the range from the edge coil 112P to the start energizing distance DT2 based on the acquired location information of the vehicle CR. When the distance from the edge coil 112P to the vehicle CR is equal to or longer than the start energizing distance DT2 (S220: NO), the edge transmission control unit 174 continues to acquire the location information of vehicle CR to determine that the vehicle CR has reached the range from edge coil 112P to start energizing. When the distance from the edge coil 112P is shorter than the start energizing distance DT2 (S220: YES), the edge transmission control unit 174 proceeds to step S222.

In step S222, the vehicle control unit 280 initiates a start transmitting request to the power transmission device 100. When the current position of the vehicle CR reaches the start energizing distanceDT2, the vehicle control unit 280 initiates the start transmitting request, and using the receiver's local-area communication unit 27 to transmit the location information of the vehicle CR and the identification information of the vehicle CR.

In step S224, the edge transmission request signal receiving unit 172 acquires the location information of the vehicle CR and the identification information of the vehicle CR transmitted by the receiver's local-area communication unit 270. The edge transmission control unit 174 confirms that the identification information of the vehicle CR transmitted by the receiver's local-area communication unit 270 and the identification information of the vehicle CR stored in the memory in the application for reservation of use of the power transmission device 100 described above. When the both identification information of the vehicle CR match each other, the edge transmission control unit 174 permits the start transmitting request and proceeds to step S226.

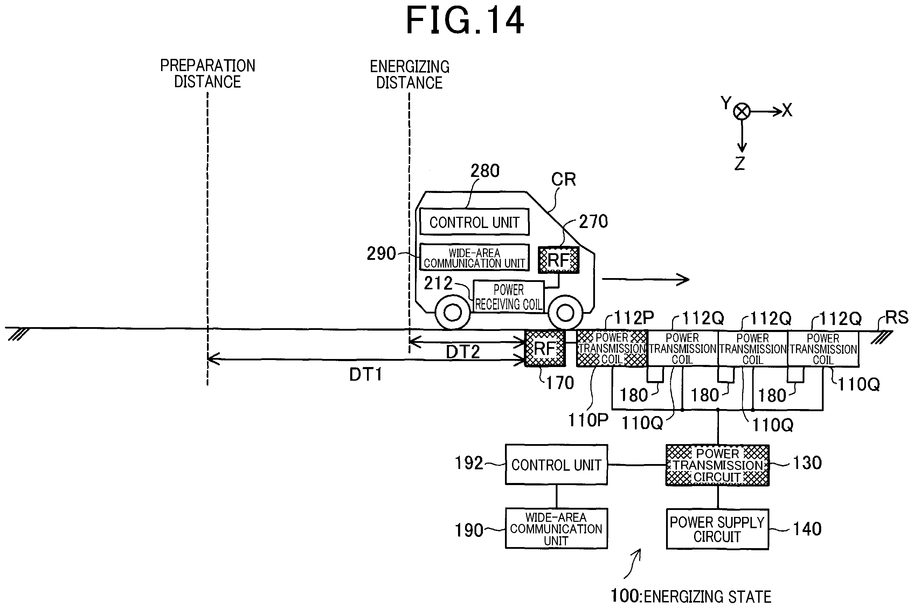

As shown in Figure 14, when the vehicle CR moves along the X-axis direction, which is the direction of travel, the vehicle CR first reaches the edge coil unit120P in the transmission area SC1. The vehicle CR transmits to the power transmission device 100, via the receiver's local-area communication unit 270, the location information of the vehicle CR, i.e., the proximity of the vehicle CR to the edge coil unit120P and completes the application to start power supply using the identification information.

In step S226, the edge transmission control unit 174 performs an edge transmission operation to transition the edge resonance circuit 110P from the standby state to the energized state. Specifically, the edge transmission control unit 174 closes (turns on) the edge current switching unit 124P to switch on the power supply from the transmission circuit 130 to the edge resonance circuit 110P and opens (turns off) the edge resonance switching unit 126P to switch the edge coils 112P and 114P to the resonance state. As a result, the input impedance Z1 of the edge resonance circuit 110P is reduced, and a large current for power supply flows to the edge coil 112P.

In step S228, the edge transmission control unit 174 acquires the edge current value from the edge current sensor 122P and compares the edge current value with the threshold value TH1. The threshold value TH1 is a threshold value for determining whether the power reception coil 212 becomes a non-facing state from a facing state with the edge coil 112P. The threshold value TH1 can be set arbitrarily using a value lower than the edge current value flowing when power is supplied from the edge coil 112P to the power reception coil 212. When the edge current value is equal to or less than the threshold value TH1, the edge transmission control unit 174 proceeds to step S230.

In step S230, the edge transmission control unit 174 performs an edge transmission suspend operation to shift the edge resonance circuit 110P from the energized state to the standby state. Specifically, the edge transmission control unit 174 switches off the power supply from the transmission circuit 130 to the edge resonance circuit 110P by opening (turning off) the edge current switching unit 124P. The edge resonance switching unit 126P is closed (turned on) to switch the edge coil 112P and the edge resonance capacitor 116P to the non-resonance state. As a result, the input impedance Z1 of the edge resonance circuit 110P becomes a high-impedance state with a substantially infinity, and the edge coil current of the edge coil 112P substantially stops flowing.

For example, in a case that the edge resonance switching unit 126P is closed prior to the opening of the edge current switching unit 124P, a short-circuit current may flow to the edge coil unit 120P. In this embodiment, the edge transmission control unit 174, in the above-mentioned edge transmission suspend operation, first opens (turns off) the edge current switching unit 124P and then closes (turns on) the edge resonance switching unit 126P. This configuration can suppress or prevent the generation of short-circuit current in the edge coil unit 120P. However, if short-circuit current is not a problem, the closing of the edge resonance switching unit 126P and the opening of the edge current switching unit 124P may be performed simultaneously or in any order.

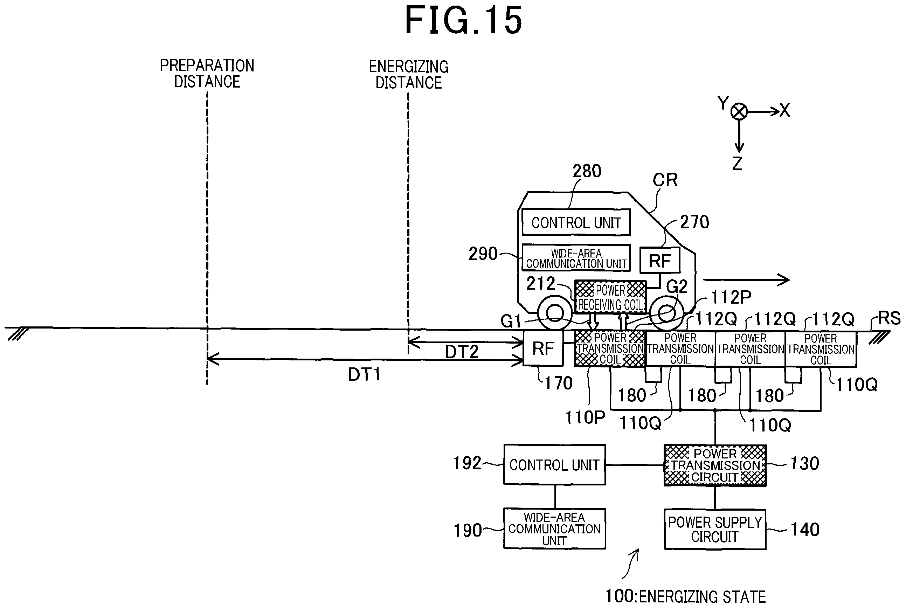

As shown in Figure 15, the vehicle CR completes the application to start power transferring while driving and reaches on the edge coil 112P, which is in the energized state and the current for power transferring is flowing. When the power reception coil 212 approaches the edge coil 112P and becomes the facing state, the magnetic flux G2 generated from the edge coil 112P induces the magnetic flux G1 of the power reception coil 212 by resonance, resulting in magnetic coupling. As a result, power is started to be supplied from the power transmission device 100 to the power receiving device 200.

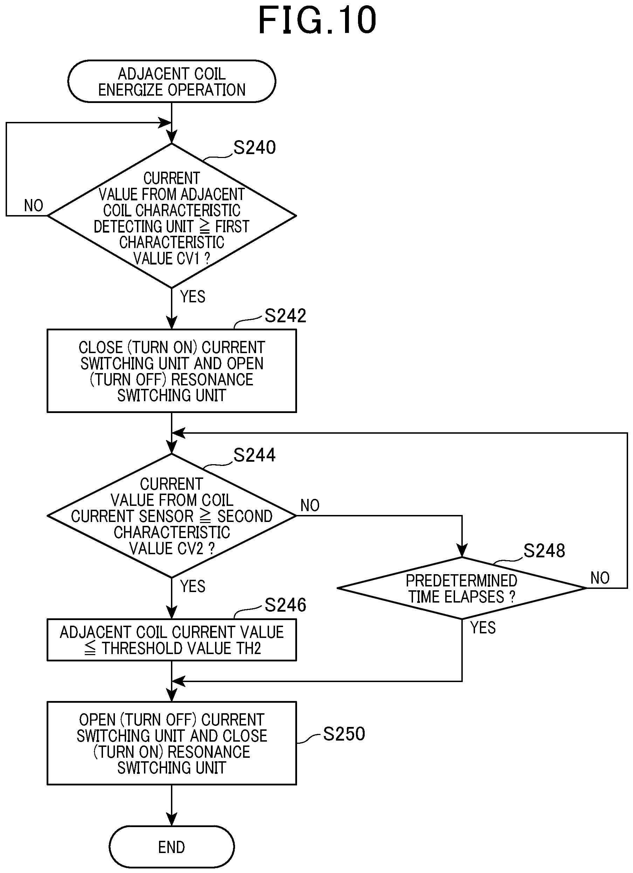

As shown in Figure 10, in the adjacent coil energizing operation, in step S240, the adjacent transmission control unit 182 acquires the adjacent coil current value from the adjacent coil characteristic detecting unit 184 and compares the adjacent coil current value with the first characteristic value CV1. The first characteristic value CV1 is a threshold value for determining whether the adjacent coil 112Q is ready to magnetically couple with the power reception coil 212. The first characteristic value CV1 is set a value smaller than the second characteristic value CV2 described below. The first characteristic value CV1 is set a value smaller than the adjacent coil current value in the facing state, for example. When the edge coil 112P becomes a facing state with the power reception coil 212 and magnetically couples to the power reception coil 212 to start supplying power, the adjacent coil 112Q is affected by the magnetic flux generated in the power reception coil 212 the adjacent coil current flows even before it becomes a facing state. The first characteristic value CV1 is the threshold value used to detect the start of adjacent coil current generation in adjacent coil 112Q. In other words, it is the threshold value used to determine whether the power reception coil 212 is approaching the adjacent coil 112Q and can become a facing state.

When the adjacent transmission control unit 182 detects that the adjacent coil current value detected from the adjacent coil characteristic detecting unit 184 is equal to or greater than the first characteristic value CV1 (S240: YES), the adjacent transmission control unit 182 proceeds to step S242 and controls the adjacent current switching unit 124Q to set the adjacent coil 112Q to the energized state. More specifically, the adjacent transmission control unit 182 switches the adjacent current switching unit 124Q to be closed (turned on) and the adjacent resonance switching unit 126Q to be opened (turned off) as an adjacent transmission operation.

In step S244, the adjacent transmission control unit 182 compares the adjacent coil current value with the second characteristic value CV2. The second characteristic value CV2 is a threshold value to determine whether a large adjacent coil current value for supplying power to the power reception coil212 is flowing to the adjacent coil112Q. In other words, the second characteristic value CV2 is a threshold value to determine whether the adjacent coil112Q is in a facing state with the power reception coil 212. The second characteristic value CV2 is set, for example, an average value, a lower limit, a lower specification limit, etc. of the current value that flows during the power supply to the power reception coil 212.

When the adjacent coil current value detected by the adjacent coil characteristic detecting unit 184 is equal to or greater than the second characteristic value CV2 (S244: YES), the adjacent transmission control unit 182 proceeds to step S246. In step S246, when it is confirmed that the adjacent coil current value is equal to or less than the threshold value TH2, the adjacent transmission control unit 182 proceeds to step S250. The threshold value TH2 is a threshold value to detect that the adjacent coil current no longer flows in the adjacent coil 112Q. In other words, the threshold value TH2 is a threshold value to determine the power reception coil 212 is separated from the adjacent coil 112Q and has become a non-facing state from a facing state. The threshold value TH2 is set, for example, in the same manner as the threshold value TH1 described above.

In step S250, the adjacent transmission control unit 182 performs an adjacent transmission suspend operation to transition the adjacent resonance circuit 110Q from the energized state to the standby state. Specifically, the adjacent transmission control unit 182 opens (turns off) the adjacent current switching unit 124Q to turn off the power supply from the transmission circuit 130 and closes (turns on) the adjacent resonance switching unit 126Q to switch the adjacent coil 112Q and the adjacent resonance capacitor 116Q to the non-resonance state. As a result, the input impedance Z1 of the adjacent resonance circuit 110Q becomes a high-impedance state with a substantially infinity, and the coil current of the adjacent coil 112Q stops flowing.

For example, in a case that the adjacent resonance switching unit 126Q is closed (turned on) first, a short circuit current may flow in the adjacent coil unit 120Q. In this embodiment, the adjacent transmission control unit 182, in the abovementioned adjacent transmission suspension operation, opens (turns off) the adjacent current switching unit 124Q first and closes (turns on) the adjacent resonance switching unit 126Q later. This configuration can suppress or prevent the generation of short-circuit current in the adjacent coil unit 120Q. However, if short-circuit current is not a problem, for example, the short-circuiting of the adjacent resonance switching unit 126Q and the opening of the adjacent current switching unit 124Q may be performed in any order.

In step S244, when the adjacent coil current value is less than the second characteristic value CV2 (S244: NO), the adjacent transmission control unit 182 proceeds to step S248, and determines whether a predetermined time has elapsed from the time point when the adjacent transmission operation was executed. The "time point when the adjacent transmission operation was executed" includes the time point when it is confirmed in step S240 that the adjacent coil current value is equal to or greater than the first characteristic value CV1. When the predetermined time does not elapse (S248: NO), the process returns to step S244. The processing of steps S244 and S248 can be applied to the edge coil energizing operation, and specifically, for example, the processing of steps S244 and S248 can be applied between steps S226 and S228 shown in Figure 9.

When the specified time elapses without the adjacent coil current value becoming equal to or greater than the second characteristic value CV2 (S248: YES), the process moves to step S250 to perform the adjacent transmission suspend operation as described below. By this configuration, although the power reception coil 212 passes over the edge coil 112P and the adjacent coil 112Q is switched to the energized state, if, for example, the lane of the vehicle CR that passed over the edge coil 112P changes lanes or stops, the adjacent coil 112Q can be shifted to the standby state. Then unnecessary continuation of current to the adjacent coil 112Q is suppressed or prevented.

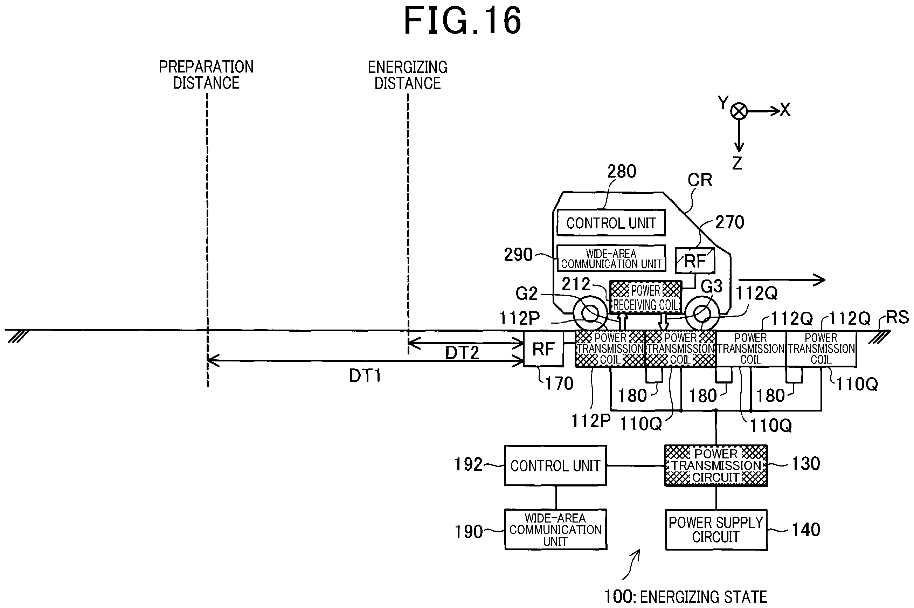

As shown in Figure 16, when the vehicle CR continues to run from the facing state between the power reception coil 212 and the edge coil 112P shown in Figure 15, the magnetic flux G3 generated in the power reception coil 212 causes a current to flow in the adjacent coil 112Q. The adjacent transmission control unit 182 detects that the adjacent coil current of the adjacent coil 112Q detected by the adjacent coil characteristic detecting unit 184 is equal to or greater than the first characteristic value CV1 and executes the adjacent transmission operation of the adjacent resonance circuit 110Q. As a result, the input impedance Z1 of the adjacent resonance circuit 110Q is changed to a small value, and a large current for transferring power flows to the adjacent coil 112Q. When the vehicle CR runs and the power reception coil 212 and the adjacent coil 112Q are in a facing state, the power supply by magnetic coupling between the adjacent coil 112Q and the power reception coil 212 starts. By the start of power supply, the adjacent transmission control unit 182 detects that the adjacent coil current of the adjacent coil 112Q is equal to or greater than the second characteristic value CV2. Thus, in transmission area SC1, after the start of power supply by edge coil 112P, the adjacent coil 112Q adjacent to the edge coil 112P, and the followings adjacent coils 112Q can start transferring power without using the local-area communication.

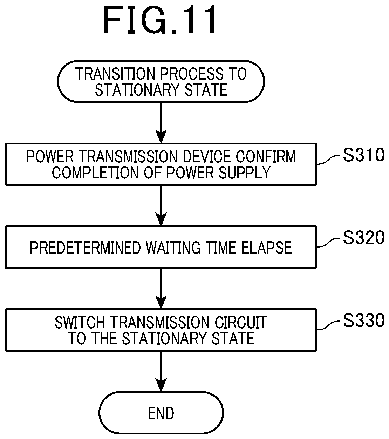

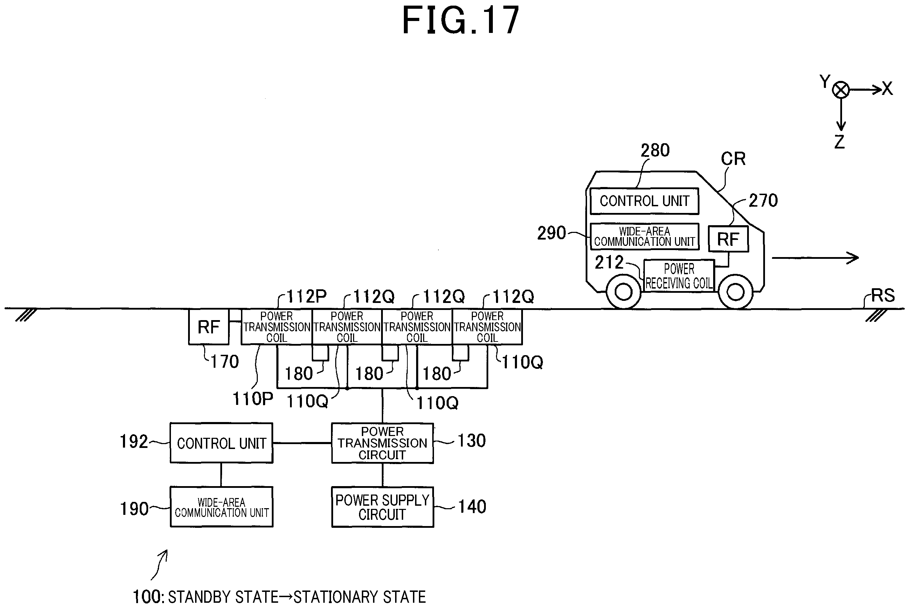

Returning to Figure 6, in step S30, the power transmission device 100 in the energized state transitions to the stationary state and the process is complete. As shown in Figure 11, in step S310, transmission circuit control unit 192 confirms that the power supply of the transmission area SC1 has been completed, i.e., power transmission device 100 has switched from the energized state to the standby state. In the example in Figure 17, the transmission circuit control unit 192 confirms that the power supply by all the power transmission resonance circuits included in the transmission area SC1 has been completed. More specifically, the transmission circuit control unit 192 verifies that the edge coil current value of edge coil 112P is less than the threshold value TH1 and that the adjacent coil current value of adjacent coil 112Q is less than the threshold value TH2, then confirms the end of power supply by the transmission area SC1.

When the driving of the vehicle CR causes the power receiving device 200 to be separated from the edge transmission control device 170 and the receiver's local-area communication unit 270 to a distance longer than the communication distance between the edge transmission control device 170 and the receiver's local-area communication unit 270, the edge transmission control device 170 no longer receives the transmission request signal from the vehicle CR. Therefore, instead of or addition to the method using the current flowing in the coil unit, it is possible to detect the end of power supply by the transmission area SC1 by detecting that the edge transmission control device 170 no longer receives the transmission request signal, or that a predetermined period that may be necessary for the vehicle CR to pass through the transmission area SC1 elapse. According to the power transmission device 100 configured in this way, the edge current sensor 122P and the adjacent current sensor 122Q can be omitted, whereby it is possible to suppress increase in the number of parts.

In step S320, the transmission circuit control unit 192 keeps time from the time point when the power transmission device 100 is switched to the standby state and waits for a predetermined waiting time to elapse. By waiting in the standby state before transitioning to the standby state, the transition period to the energized state can be closed when the next vehicle enters the transmission area SC1. When the waiting time elapses, in step S330, the transmission circuit control unit 192 stops driving the transmission circuit 130, switches the power transmission device 100 to the stationary state, and terminates the process. The process may be terminated by detecting that communication between the receiver's wide-area communication unit 290 and the transmitter's wide-area communication unit 190 has been terminated.

As described above, the power transmission device 100 of this embodiment includes the edge coil unit 120P, the adjacent coil unit 120Q adjacent to the edge coil unit 120P, the edge transmission request signal receiving unit 172 that receives the edge transmission request signal to initiate power transmission by the edge coil unit 120P, the edge transmission control unit 174 that controls, in response to the edge transmission request signal, the on and off state of the power supply from the power source to the edge resonance circuit 110P using the edge current switching unit 124Q, and the adjacent transmission control unit 182 that controls the on and off state of the power supply from the power source to the adjacent resonance circuit 110Q using the adjacent current switching unit 124Q. The edge coil unit 120P includes the edge resonance circuit 110P having the edge coil 112P and the edge resonance capacitor 116P, and the edge current switching unit 124P that switches on and off state of the power supply from the transmission circuit 130 to the edge resonance circuit 110P. The adjacent coil unit 120Q includes the adjacent coil 112Q, the adjacent resonance circuit 110Q having the adjacent coil 112Q and the adjacent resonance capacitor 116Q, and the adjacent current switching unit 124Q that switches on and off state of the power supply from the transmission circuit 130 to the adjacent resonance circuit 110Q.The edge transmission control unit 174 is configured to switch the on and off state of the power supply to the edge resonance circuit 110P in response to receipt of the edge transmission request signal from the power receiving device 200. Therefore, this embodiment can switch the edge coil unit 120P and the power transmission device 100 to be the state of able to feed power more reliably, than the form of switching the power supply on and off using the electrical characteristic value of the edge coil 112P, such as current value and magnetic flux. Therefore, this embodiment can suppress or prevent the problem that the power supply from the power transmission device 100 to the power receiving device 200 does not start when power reception coil 212 changes from non-facing state to facing state with the edge coil 112P. According to the power transmission device 100 of this embodiment, as the edge coil unit 120P is equipped with the edge current switching unit 124P, it is possible to suppress or prevent unnecessary standby current flowing to the edge coil unit 120P. According to the power transmission device 100 of this embodiment, as the adjacent coil unit 120Q is equipped with the adjacent current switching unit 124Q, it is possible to suppress or prevent unnecessary standby current flowing when the adjacent coil 112Q is in the non-facing state.

According to the power transmission device 100 of this embodiment, the edge coil unit 120P includes the edge resonance switching unit 126P that switches the state of the edge coil 112P and the edge resonance capacitor 116P between the resonance state and the non-resonance state by changing the impedance of the edge coil 112P and the edge resonance capacitor 116P. The edge transmission control unit 174 switches the state of the edge coil 112P and the edge resonance capacitor 116P between the resonance state and the non-resonance state using the edge resonance switching unit 126P based on the edge transmission request signal. As the edge transmission control unit 174 can switch the state of the edge resonance circuit 110P between the resonance state and the non-resonance state which is a parallel resonance circuit using the edge resonance switching unit 126P, compared to the case where the edge coil unit 120P is a series resonance circuit, the standby current in the state where the edge coil 112P does not contribute to power transmission, such as the non-facing state, can be reduced, and power loss can be reduced.

According to the power transmission device 100 of this embodiment, when the edge transmission request signal is received by the edge transmission request signal receiving unit 172, the edge transmission control unit 174 controls the edge current switching unit 124P to supply power from the power source to the edge resonance circuit 110P and controls the edge resonance switching unit126P to perform the edge transmission operation to put the edge coil112P and the edge resonance capacitor116P in the resonance state. It is possible to switch between the standby state and the energized state by simple control using the edge current switching unit 124P and the edge resonance switching unit126P.

According to the power transmission device 100 of this embodiment, the edge coil unit 120P further includes the edge current sensor 122P for detecting the edge current value of the power supplied from the power source to the edge resonance circuit 110P. When the edge current value is less than the predetermined threshold TH1, the edge transmission control unit 174 performs the edge transmission suspend operation to control the edge current switching unit 124P to suspend the power supply from the power source to the edge resonance circuit 110P and control the edge resonance switching unit 126P to put the edge coil112P and the edge resonance capacitor116P in the non-resonance state. It is possible to switch between the standby state and the energized states by a simple control using the detection value of the current sensor, the edge current switching unit 124P, and the edge resonance switching unit 126P.

According to the power transmission device 100 of this embodiment, the edge transmission control unit 174, in the edge transmission suspend operation, controls the edge current switching unit 124P to stop supplying power from the power source to the edge resonance circuit 110P, and then controls the edge resonance switching unit 126P to put the edge coil 112P and the edge resonance capacitor 116P in the non-resonance state. Therefore, it is possible to suppress or prevent the generation of a short-circuit current in the edge coil unit 120P.

According to the power transmission device 100 of this embodiment, the adjacent coil unit 120Q includes the adjacent resonance switching unit 126Q controlled by the adjacent transmission control unit 182. The adjacent resonance switching unit 126Q switches the state of the adjacent coil 112Q and the adjacent resonance capacitor 116Q between the resonance state and the non-resonance state by changing the impedance of the adjacent coil 112Q and the adjacent resonance capacitor 116Q. As the state of the adjacent resonance circuit 110Q which is a parallel resonance circuit can be switched between the resonance state and the non-resonance state by the adjacent resonance switching unit 126Q, compared to the case where the adjacent coil unit 120Q is a series resonance circuit, it is possible to reduce the standby current in the state where the adjacent coil 112Q does not contribute to power transmission, such as the non-facing state and reduce the power loss.

The power transmission device 100 of this embodiment further includes the adjacent coil characteristic detecting unit 184 that detects the electrical characteristic value of adjacent coil 112Q, which is one of the voltage applied to adjacent coil 112Q, the current flowing through adjacent coil 112Q, and the magnetic field generated in adjacent coil 112Q. When the electrical characteristic value is equal to or greater than the predetermined first characteristic value CV1, the adjacent transmission control unit 184 performs the adjacent transmission operation to control the adjacent current switching unit 124Q to transfer power from the power source to the adjacent resonance circuit 110Q and control the adjacent resonance switching unit 126Q to put the adjacent coil 112Q and the adjacent resonance capacitor 116Q in the resonance state. By using the electrical characteristic value of the adjacent coil 112Q, it is possible to determine the facing state between the adjacent coil 112Q and the power reception coil 212 by a simple manner without communication with the power receiving device 200.

According to the power transmission device 100 of this embodiment, the adjacent coil unit 120Q further includes the adjacent current sensor 122Q that detects the adjacent current value of the power supplied from the power source to the adjacent resonance circuit 110Q. When the adjacent current value is less than the predetermined threshold TH2, the adjacent transmission control unit 182 performs the adjacent transmission suspend operation to control the adjacent current switching unit 124Q to suspend the power supply from the transmission circuit 130 to the adjacent resonance circuit 110Q and to control the adjacent resonance switching unit 126Q to put the adjacent coil 112Q and the adjacent resonance capacitor 116Q in the non-resonance state. It is possible to switch the standby state and the energized state by a simple control using the adjacent current switching unit 124Q and the adjacent resonance switching unit 126Q.

According to the power transmission device 100 of this embodiment, the adjacent transmission control unit 182, in the adjacent transmission suspend operation, controls the adjacent current switching unit 124Q to suspend the power supply from the transmission circuit 130 to the adjacent resonance circuit 110Q, and then control the adjacent resonance switching unit 126Q to put the adjacent coil 112Q and the adjacent resonance capacitor 116Q in the non-resonance state. Therefore, it is possible to suppress or prevent the generation of a short-circuit current in the adjacent coil unit 120Q.

According to the power transmission device 100 of this embodiment, after performing the adjacent transmission operation, when the electrical characteristic value is equal to or greater than the predetermined second characteristic value CV2, the second characteristic value CV2 being greater than the first characteristic value CV1, the adjacent transmission control unit 182 performs the adjacent transmission suspend operation. After performing the adjacent transmission operation, when the electrical characteristic value is less than the second characteristic value CV2, the adjacent transmission control unit 182 performs the adjacent transmission suspend operation after the predetermined period has elapsed from the time when the adjacent transmission operation was performed. According to this form of the power transmission device 100, when the adjacent coil 112Q is switched to an energized state but does not become a facing state with the adjacent coil 112Q, etc., it is possible to suppress or prevent unnecessary energization to the adjacent coil 112Q continues to occur.

According to the power transmission device 100 of this embodiment, the edge transmission request signal receiving unit 172 receives the local-area communication signal with a communication distance of 5 meters or less as the edge transmission request signal. Therefore, by using the communication distance of the local-area communication to narrow the detection range of the vehicle that is the target of power transmission, the identification of one vehicle among multiple vehicles that can use the power transmission device 100 can be improved. Also, it is possible to control the on and off state of the power transmission over a short distance, improve the electromagnetic compatibility (EMC) of the power transmission device 100, and reduce unnecessary power consumption in the non-facing state with the power receiving device 200.

The power transmission device 100 of this embodiment furthermore further includes the transmission circuit 130 that supplies AC power to the edge coil unit 120P and the adjacent coil unit 120Q, the transmission circuit control unit192 that drives transmission circuit130, and the transmitter's wide-area communication unit190 that receives the wide-area communication signals with a communication distance longer than 5 meters. When the communication unit 190 receives the wide-area communication signal, the transmission circuit control unit 192 drives the transmission circuit 130. Therefore, it is possible to set the power transmission device 100 to the standby state in advance before the start of the power supply, and shorten the time required to switch the transmission circuit 130 to the energized state when the power receiving device 200 comes into proximity.

### B. Second Embodiment:

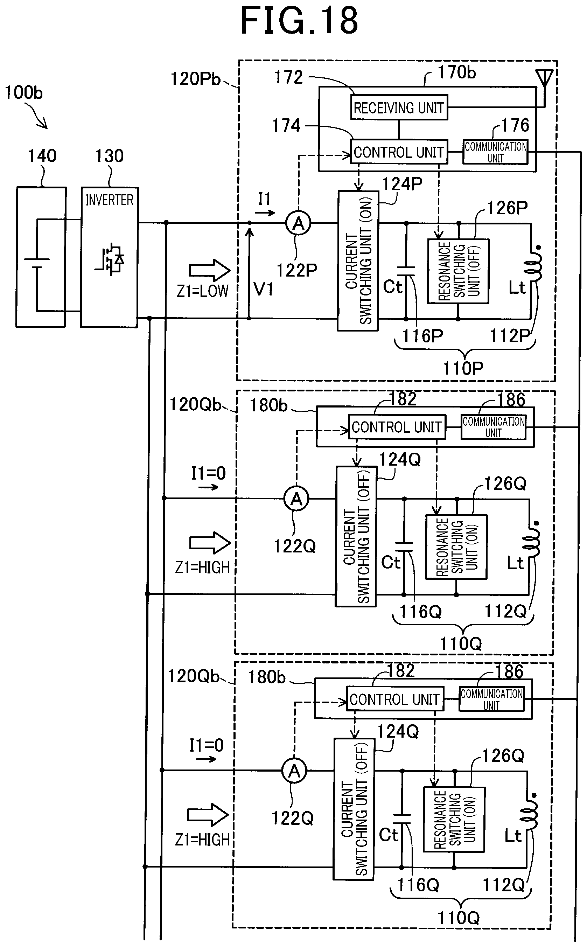

As shown in Figure 18, the power transmission device 100B according to the second embodiment differs from the power transmission device 100 according to the first embodiment in that it includes an edge coil unit 120Pb instead of the edge coil unit 120P and an adjacent coil unit 120Qb instead of the adjacent coil unit 120Q. The other configuration may be same as the power transmission device 100 according to the first embodiment. In this embodiment, the edge coil unit 120Pb and the adjacent coil unit 120Qb communicate with each other. In Figure 18, the power receiving device 200 is omitted, but the power reception coil 212 is in a facing state with the edge coil 112P.

The edge coil unit 120Pb differs from the edge coil unit 120P according to the first embodiment in that it includes an edge transmission control device 170b instead of the edge transmission control device 170. The other configuration may be same as the edge coil unit 120P according to the first embodiment. The adjacent coil unit 120Qb differs from the adjacent coil unit 120Q according to the first embodiment in that it includes an adjacent transmission control device 180b instead of the adjacent transmission control device 180. Other configuration may be same as the adjacent coil unit 120Q.

The adjacent transmission control device 180b includes an adjacent communication unit 186 instead of the adjacent coil characteristic detecting unit 184. The edge transmission control device 170b further includes an edge communication unit 176. The edge communication unit 176 and the adjacent communication unit 186 are wired to each other and communicate bi-directionally. The edge communication unit 176 and the adjacent communication unit 186 may communicate wirelessly to each other and communicate bi-directionally. The edge transmission control device 170b does not have to be included in the edge coil unit 120Pb as long as the edge current switching unit 124P and the edge resonance switching unit 126P of the edge resonance circuit 110P can be switched. Similarly, the adjacent transmission control device 180b does not have to be included in the edge coil unit 120Pb as long as the adjacent current switching unit 124Q and the adjacent resonance switching unit 126Q of the adjacent resonance circuit 110Q are switchable. The adjacent transmission control device 180b, as well as the adjacent communication unit 186, may include the adjacent coil characteristic detecting unit 184, such as a current sensor.

In this embodiment, the edge communication unit 176 functions as the adjacent transmission request signal transmitting unit that transmits the adjacent transmission request signal to initiate power transmission by the adjacent coil unit 120Q. The adjacent communication unit 186 functions as the adjacent transmission request signal receiving unit that receives the adjacent transmission request signal. In this embodiment, the adjacent communication unit 186, under the control of the adjacent transmission control unit 182, transmits an adjacent transmission supplying signal to initiate transmission by another adjacent coil unit 120Q. The edge communication unit 176, under the control of the edge transmission control unit 174, transmits the adjacent transmission request signal to adjacent transmission request signal receiving unit when the power transmission to the power receiving device 200 by edge coil unit 120P is started. When the adjacent transmission control unit 182 receives the adjacent transmission request signal, the adjacent transmission control unit 182 performs the adjacent transmission operation. The adjacent transmission request signal may be sent from a configuration other than the edge communication unit 176, such as the transmission circuit control unit 192, for example.

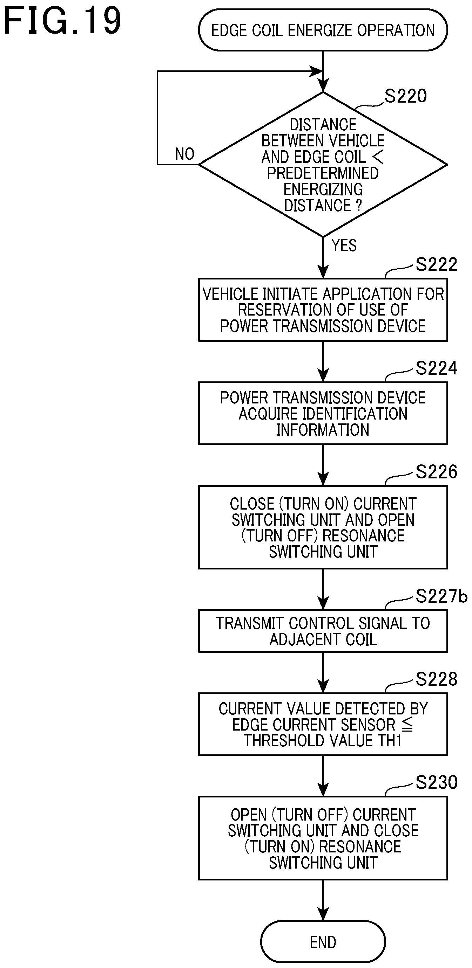

As shown in Figure 19, the edge coil energizing operation according to this embodiment differs from the edge coil energizing operation according to the first embodiment in that step S227b is further executed after step S226. The edge transmission control unit 174 executes the edge transmission operation to transition the edge resonance circuit 110P from the standby state to the energized state in step S226. When the edge transmission operation is performed in step S226, the edge transmission control unit 174 proceeds to step S227b and controls the edge communication unit 176 to transmit the adjacent transmission request signal to the adjacent communication unit 186.

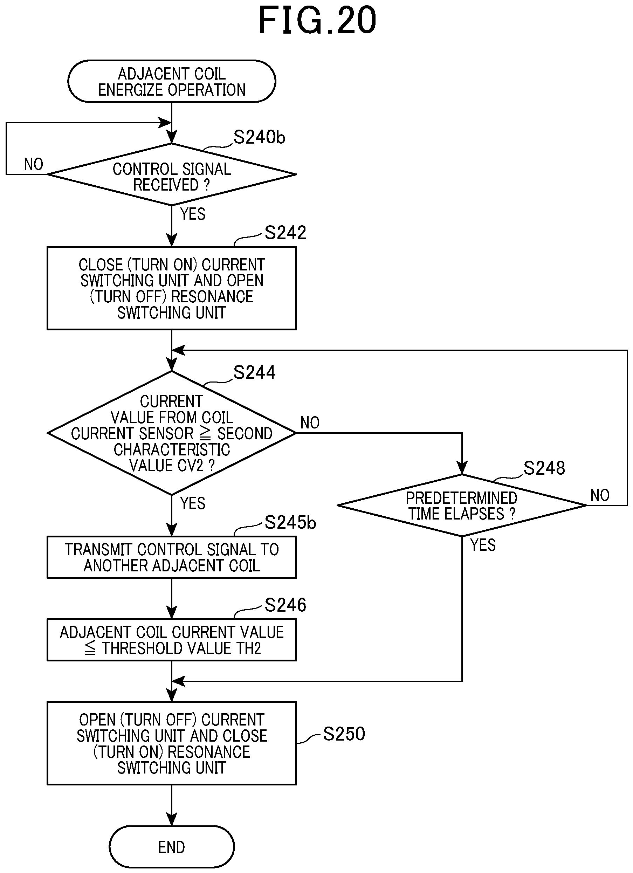

As shown in Figure 20, the adjacent coil energizing operation according to this embodiment differs from the adjacent coil energizing operation according to the first embodiment in that step S240b is executed instead of step S240 and step S245b is executed after step S244. The other steps are same as the adjacent coil energizing operation according to the first embodiment. In step S240b, the adjacent transmission control unit 182 waits for receipt of the adjacent transmission request signal. When the adjacent communication unit 186 receives the adjacent transmission request signal (S240b: YES), the adjacent communication unit 186 proceeds to step S242 and performs the adjacent transmission operation.

In step S244, the adjacent transmission control unit 182 proceeds to step S245b when the adjacent coil current value detected from the adjacent coil characteristic detecting unit 184 is equal to or greater than the second characteristic valueCV2 (S244: YES). In step S245b, the adjacent communication unit 186, under the control of the adjacent transmission control unit 182, transmits the adjacent transmission supplying signal to the other adjacent coil unit 120Q for initiating the power transmission by the other adjacent coil unit 120Q. In this embodiment, the adjacent communication unit 186 transmits the adjacent transmission supplying signal to the adjacent coil unit 120Q that is adjacent to the targeted adjacent coil unit 120Q, the targeted adjacent coil unit 120Q being the adjacent coil unit 120Q which is the subject of this flowchart. This allows other adjacent coil units 120Q to be switched to a state where they can also transmit power. The "adjacent coil unit 120Q adjacent to the power reception coil 212" means the adjacent coil unit 120Q that can be in a facing state with the power reception coil 212 next according to the direction of the vehicle CR. However, not limited to this, the adjacent transmission supplying signal may be transmitted from the targeted adjacent coil unit 120Q to all the other adjacent coil units 120Q.

The power transmission device 100B of this embodiment further includes an adjacent communication unit 186 as the adjacent transmission request signal receiving unit that receives the adjacent transmission request signal to initiate power transmission by the adjacent coil unit 120Q. When the adjacent transmission control unit 182 receives the adjacent transmission request signal, the adjacent transmission control unit 182 controls the adjacent current switching unit 124Q to perform the adjacent transmission operation. Therefore, the adjacent coil unit 120Q can be switched to a power-supply state more reliably than a power transmission device that switches the power supply on and off using the electrical characteristic value of the edge coil 112P, such as current value and magnetic flux. In addition, the adjacent coil characteristic detecting unit 184 can be omitted, and the number of parts of the adjacent coil unit 120Q can be reduced.

The power transmission device 100B of this embodiment further includes the edge communication unit 176 as the adjacent transmission request signal transmitting unit that transmits the adjacent transmission request signal. When the power transmission by the edge coil unit 120P is initiated, the edge communication unit 176 transmits the adjacent transmission request signal to the adjacent transmission request signal receiving unit. The edge communication unit 176 transmits an adjacent transmission request signal to the adjacent transmission request signal receiving unit when transmission by the 120P edge coil unit is to be initiated. This allows the system to switch the adjacent coil unit 120Q to a power-feedable state at the appropriate timing when the power transmission by the adjacent coil unit 120Q may be required and suppress or prevent unnecessary power supply that does not contribute to power transmission.

### C. Third Embodiment:

The power transmission device according to the third embodiment is similar in configuration to the power transmission device 100b according to the second embodiment shown in Figure 18. In this embodiment, the adjacent communication unit 186 functions as the edge transmission suspend request signal transmitting unit to suspend the transmission of power to power receiving device 200 by edge coil unit 120Pb. The edge communication unit 176 functions as the edge transmission suspend request signal receiving unit to receive the edge transmission suspend request signal transmitted by the adjacent communication unit 186.

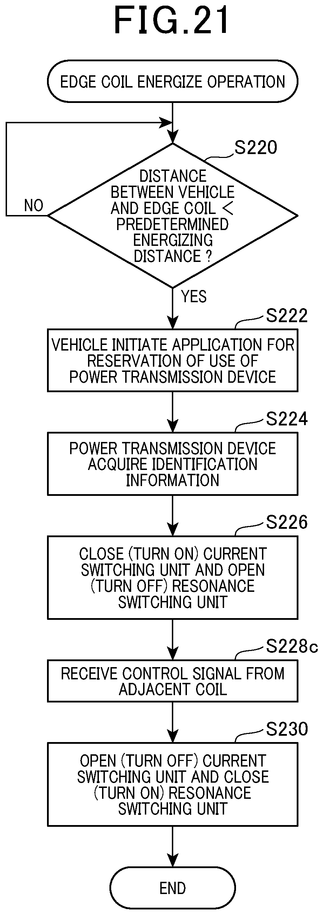

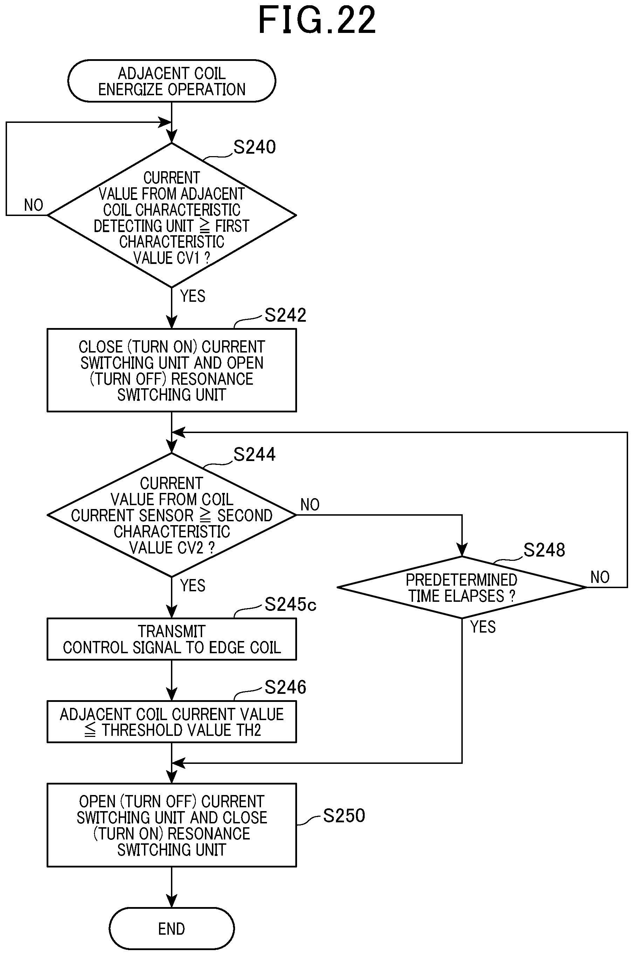

This embodiment differs from the second embodiment in that step S228c is executed instead of steps S227b and S228 in the edge coil energizing operation, as shown in Figure 21. Also, as shown in Figure 22, this embodiment differs from the second embodiment, in the adjacent coil energizing operation, the same step S240 as in the first embodiment is executed instead of step S240b, and step S245c is executed instead of step S245b.

When power transmission by the 120P edge coil unit starts in step S226 shown in Figure 21, in step S240 shown in Figure 22, the adjacent coil current value detected by the adjacent coil characteristic detecting unit 184 becomes equal to or greater than the first characteristic value CV1 (S240: YES), and the process proceeds to step S242. The adjacent transmission control unit 182 controls the adjacent current switching unit 124Q and switches the adjacent coil 112Q to be capable of being in the energized state. When the adjacent coil current value becomes equal to or greater than the second characteristic CV2 (S244: YES), the adjacent transmission control unit 182 proceeds to step S245c and transmits the edge transmission suspend request signal via the adjacent communication unit 186 to the edge communication unit 176.

As shown in Figure 21, in step S228c, the edge transmission control unit 174 acquires the edge transmission suspend request signal from the adjacent communication unit 186 via the edge communication unit 176. When acquiring the edge transmission suspend request signal, in step S230, the edge transmission control unit 174 performs the edge transmission suspend operation to transition the edge resonance circuit 110P from the energized state to the standby state.

According to the power transmission device of this embodiment, the adjacent communication unit 186 functions as the edge transmission suspend request transmitting unit that transmits the edge transmission suspend request signal to suspend the power transmission by the edge coil unit 120P. The edge communication unit 176 functions as the edge transmission suspend request receiving unit that receives the edge transmission suspend request signal. When the power transmission by the adjacent coil unit 120Q is initiated, the adjacent transmission control unit 182 controls the adjacent communication unit 186 to transmit the edge transmission suspend request signal. When the edge transmission suspend request signal is received, the edge transmission control unit 174 controls the edge current switching unit 124P to perform the edge transmission suspend operation. Therefore, the power transmission of the edge coil unit 120P can be suspended more reliably than when using the electrical characteristic value, etc. In addition, the power transmission of the edge coil unit 120P can be suspended at the timing when the power supply by the edge coil unit 120P is completed, and it is possible to suppress or prevent unnecessary power supply that does not contribute to power transmission.

### D. FOURTH EMBODIMENT:

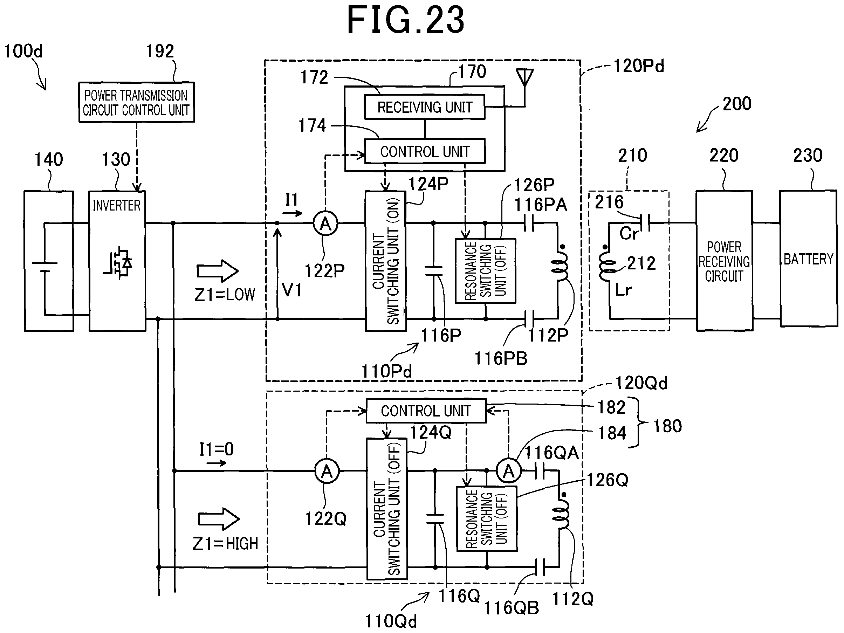

As shown in Figure 23, the power transmission device 100d according to the fourth embodiment differs from the power transmission device 100 according to the first embodiment in that it includes an edge coil unit 120Pd instead of the edge coil unit 120P and an adjacent coil unit 120Qd instead of the adjacent coil unit 120Q. Other configurations are the same as the power transmission device 100 according to the first embodiment the power transmission device 100 according to the first embodiment. The edge coil unit 120Pd includes an edge resonance circuit instead of the edge resonance circuit, and the adjacent coil unit 120Qd includes an adjacent resonance circuit 110Qd instead of the adjacent resonance circuit 110Q.

In the first embodiment, an example is shown in which the primary parallel secondary series method is applied to the edge resonance circuit 110P and the adjacent resonance circuit 110Q. However, in this embodiment, the primary parallel series-secondary series method (also called "PSS method") is applied to the edge resonance circuit 110Pd and the adjacent resonance circuit 110Qd, as shown in Figure 23. The configuration of the adjacent resonance circuit 110Qd differs from that of the adjacent resonance circuit 110Q in the first embodiment in that it is a PSS system like the edge resonance circuit 110Pd. The other configurations are the same as those of the adjacent resonance circuit 110Q and are therefore omitted from this explanation.

The edge coil unit 120Pd, as well as the edge coil unit 120P according to the first embodiment, includes the edge coil 112P and the edge resonance capacitor 116P, and includes an edge in-series capacitor located between the edge coil 112P and the edge resonance capacitor 116P. In this embodiment, the edge in-series capacitor includes an edge in-series capacitor 116PA and an edge in-series capacitor 116PB connected in series at each end of the edge coil 112P, respectively. Only one of the edge in-series capacitor 116PA and the edge in-series capacitor 116PB may be provided, and any number of three or more edge in-series capacitors may be provided. The edge resonance capacitor 116P, and, the edge in-series capacitor 116PA and edge in-series capacitor 116PB are set so that their combined values are in resonance with edge coil 112P, and they function as a resonance capacitor to resonate the power supplied to the edge coil 112P. The adjacent coil unit 120Qd, as well as the adjacent coil unit 120Q according to the first embodiment, includes the adjacent coil 112Q and the adjacent resonance capacitor 116Q, and includes an adjacent in-series capacitor positioned between adjacent coil 112Q and adjacent resonance capacitor 116Q. In the example of Figure 23, the adjacent in-series capacitor includes an adjacent in-series capacitor 116QA and an adjacent in-series capacitor 116QB similarly configured to the edge in-series capacitor 116PA and edge in-series capacitor 116PB described above, respectively.

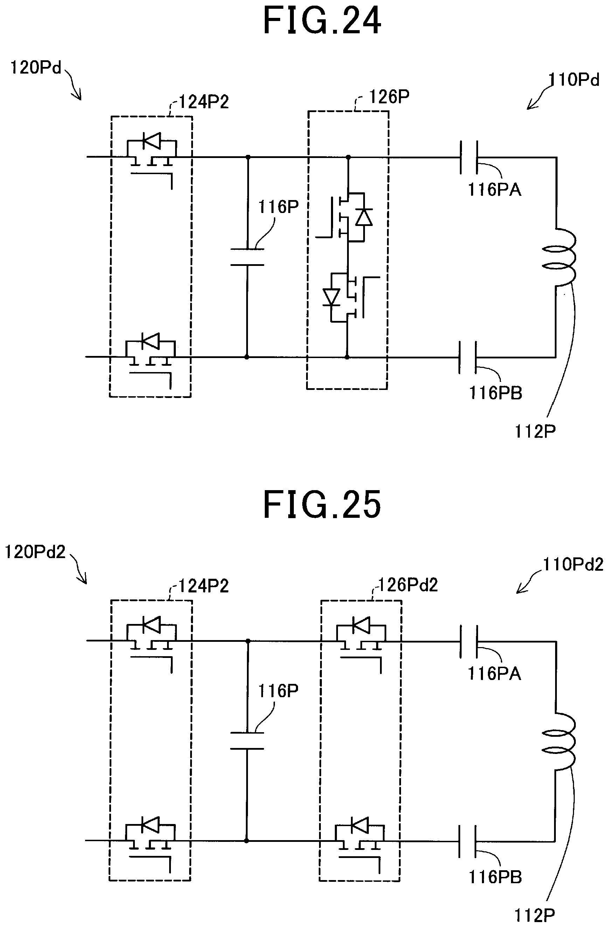

As shown in Figure 24, in this embodiment, the edge coil unit 120Pd, as well as the edge coil unit 120P2 shown in Figure 4, includes the edge resonance switching unit 126P and the edge current switching unit 124P2, in which two-way switches are arranged separately on the positive and negative pole sides. In this embodiment, the edge resonance switching unit 126P is positioned between the edge resonance capacitor 116P, and, the edge in-series capacitor 116PA and the edge in-series capacitor 116PB, and is connected to the edge coil 112 in parallel. When the edge resonance switching unit 126P is opened (turned off), the edge resonance circuit 110Pd transitions to the resonance state, and when the edge resonance switching unit 126P is closed (turned on), the edge resonance circuit 110Pd transitions to the non-resonance state. However, in another embodiment, such as the edge resonance circuit 110Pd2 included by the edge coil unit 120Pd2 shown in Figure 25, in a case that the edge resonance circuit 110Pd2 is a two-way switch using two semiconductor devices, the edge resonance switching unit 126Pd2 in which one switch is located on the positive pole and the other switch is located on the negative pole side can be provided. By this configuration, the state of the edge resonance circuit 110Pd2 can be switched between the resonance state and the non-resonance state, and the common mode noise generated in the edge resonance circuit 110Pd2 can be suppressed or prevented. In this case, when the edge resonance switching unit 126Pd2 is opened (turned off), the edge resonance circuit 110Pd2 is in the resonance state, and when the edge resonance switching unit 126 Pd2 is closed (turned on), the edge resonance circuit 110Pd2 is in the non-resonance state.

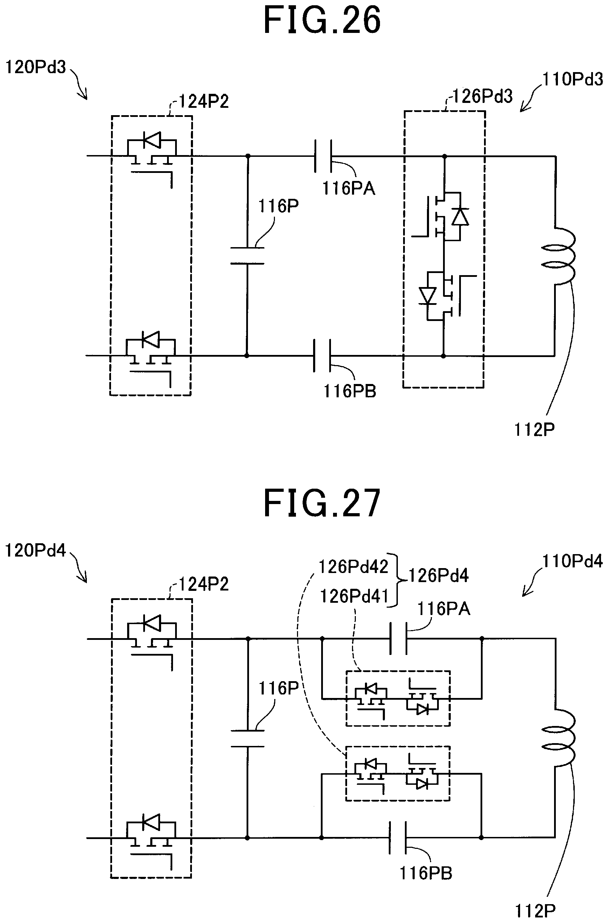

Figure 24 shows an example in which the edge resonance switching unit 126P is positioned between the edge resonance capacitor 116P and the edge in-series capacitor 116PA. However, in another embodiment, the edge resonance switching unit 126Pd3, like an edge resonance circuit 110Pd3 included by an edge coil unit120Pd3 as shown in Figure 26, can be connected in parallel to the edge coil 116P and positioned between the edge in-series capacitors 116PA and the edge in-series capacitors 116PB, and the edge coil 112P. By this configuration, the state of the edge resonance circuit 110Pd3 can be switched between the resonance state and the non-resonance state by closing and opening the edge resonance switching unit 126Pd3. When the edge resonance switching unit 126Pd3 is opened (turned off), the edge resonance circuit 110Pd3 is in the resonance state, and when the edge resonance switching unit 126Pd3 is closed (turned on), the edge resonance circuit 110Pd3 is in the non-resonance state.

In another embodiment, the edge resonance switching unit, like an edge resonance circuit 110Pd4 included by an edge coil unit 120Pd4 shown in Figure 27, may be connected to the edge in-series capacitor in parallel. The edge resonance switching unit can be provided for each of the edge in-series capacitors, respectively. For example, as shown in Figure 27, an edge resonance switching unit 126Pd4 may include an edge resonance switching unit 126Pd41 connected in parallel to the edge in-series capacitor 116PA, and an edge resonance switching unit 126Pd42 connected in parallel to the edge in-series capacitor 116PB. When multiple edge in-series capacitors are provided, it is not necessary that the edge resonance switching unit 126Pd4 is connected to all the edge in-series capacitors. The edge resonance switching unit 126Pd4 may be connected to any number of edge in-series capacitors among multiple edge in-series capacitors. By this configuration, the state of the edge resonance circuit 110Pd4 can be switched between the resonance state and the non-resonance state by closing and opening the edge resonance switching unit 126Pd4. When the edge resonance switching unit 126Pd4 is opened (turned off), the edge resonance circuit 110Pd2 is in the resonance state, and when the edge resonance switching unit 126Pd2 is closed (turned on), the edge resonance circuit 110Pd2 is in the non-resonance state.

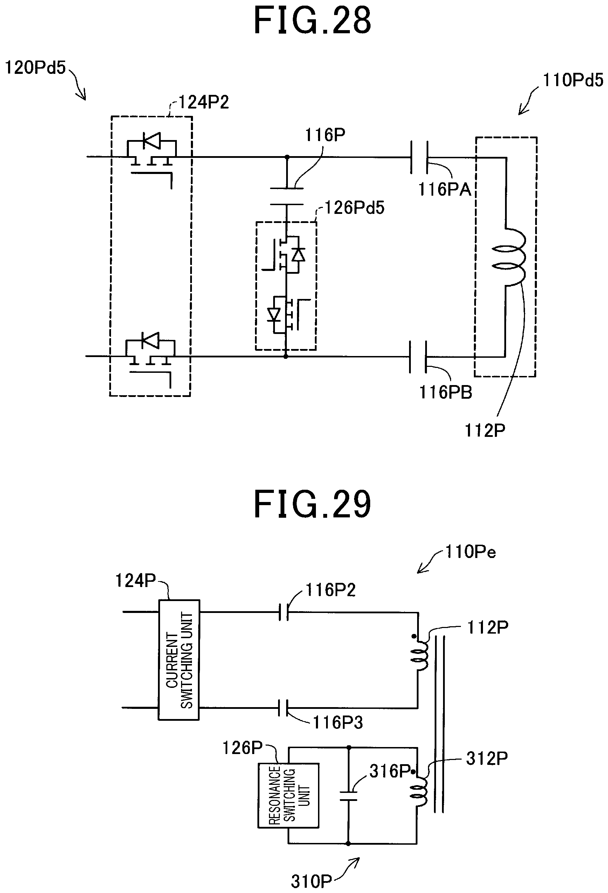

In another embodiment, like an edge resonance circuit 110Pd5 included by an edge coil unit 120Pd5 shown in Figure 28, an edge resonance switching unit 126Pd5 may be positioned between the edge resonance capacitor 116P and the edge coil 112P and is connected in series with the edge resonance capacitor 116P. By this configuration, the state of the edge resonance circuit 110Pd5 can be switched between the resonance state and the non-resonance state. When the edge resonance switching unit 126Pd5 is opened (turned off), the edge resonance circuit 110Pd5 is in the non-resonance state, and when the edge resonance switching unit 126Pd2 is closed (turned on), the edge resonance circuit 110Pd2 is in the resonance state.

### E. Another embodiment:

(E1) In the above embodiment, explanation is given using an example in which a plurality of edge coils 112P are arranged in contact with each other. The plurality of the edge coils 112P need not to be in contact with each other, and the plurality of edge coils 112P may be separated from each other. In order to facilitate the power supply from the plurality of edge coils 112P to the power reception coil 212 while the vehicle CR is running, it is preferable that the edge coils 112P are in contact with each other, and in a case that they are separated, the separation distance should be, for example, equal to or less than half the width of the edge coil (or its radius if the edge coil 112P is circular).

(E2) In the third embodiment, an example that, the adjacent transmission control unit 182 controls the edge transmission suspend request transmitting unit when the power transmission by the adjacent coil unit 120Qb is started, is shown. On the other hand, the adjacent transmission control unit 182 can also transmit the edge transmission suspend request signal at any timing, for example, when an abnormality is detected in the power transmission device, regardless of whether the power transmission by the adjacent coil unit 120Qb is initiated. The adjacent transmission control unit 182 may also transmit, instead of or together with the edge transmission suspend request signal, the adjacent transmission suspend request signal to suspend the power transmission by the other adjacent coil unit 120Qb. The edge transmission control unit 174 that has acquired the edge transmission suspend request signal may, in addition to performing the edge transmission suspend operation, also switch the power transmission device 100 to the suspended state by suspending the transmission circuit 130. The edge transmission control unit 174 that has acquired the edge transmission suspend request signal may suspend the transmission circuit 130 instead of performing the edge transmission suspend operation. "The edge transmission control unit 174 suspends the transmission circuit 130" includes that the edge transmission control unit 174 that has acquired the edge transmission suspend request signal transmit a control signal to the transmission circuit control unit 192 and have the transmission circuit control unit 192 suspend the transmission circuit 130. The edge transmission control unit 174 that has acquired the edge transmission suspend request signal may perform the edge transmission suspend operation and the adjacent transmission operation, or perform the adjacent transmission operation instead of the edge transmission suspend operation. In this case, the edge transmission control unit 174 may transmits the adjacent transmission suspend request signal using the edge communication unit 176 to the adjacent transmission control unit 182 and have the adjacent transmission control unit 182 perform the adjacent transmission suspend operation, and the edge transmission control unit 174 may perform the adjacent transmission suspend operation by directly switching the adjacent current switching unit 124Q and the adjacent resonance switching unit 126Q.

(E3) In each of the above embodiments, an example that the edge current switching unit 124P is a semiconductor device was shown. However, various components that can switch the state of the edge coil 112P and the edge resonance capacitor 116P between the resonance state and the non-resonance state by changing the impedance of the edge coil 112P and the edge resonance capacitor 116P, can be used to construct the edge current switching unit 124P. The edge current switching unit 124P may be, for example, a variable capacitor instead of a semiconductor device. The same applies to adjacent current switching unit 124Q.

(E4) As shown in Figure 29, the power transmission device may include an edge resonance circuit 110Pe including a relay resonance circuit 310P. The relay resonance circuit 310P consists of a closed circuit in which a relay coil 312P and a relay capacitor 316P, which is a resonance capacitor, are connected in parallel. In this case, the edge resonance switching unit 126P is provided in the relay resonance circuit 310P. In the relay resonance circuit 310P, the capacitance of the relay capacitor 316P is set to the capacitance at which the relay capacitor 316P and the relay coil 312P resonate.

When power is supplied from the power transmission device 100 to the power receiving device 200, the power receiving resonance circuit 210 is arranged such that the power reception coil 212 is magnetically coupled to the edge coil 112P. The relay resonance circuit 310P is arranged so that the relay coil 312P is magnetically coupled to each of the edge coil 112P and the power reception coil 212. Therefore, in the equivalent circuit, the edge resonance circuit 110P and the relay resonance circuit 310P resonance in parallel when viewed from the power source. Therefore, it can be said that relay coil 312P and relay capacitor 316P are included in the edge resonance circuit from their functions and actions. In Figure 29, two parallel straight lines indicated that each coil is magnetically coupled to each other. The power transmission device 100 configured in this way also has the same effect as the power transmission device 100 of the first embodiment described above.

(E5) In each of the above embodiments, an example is shown that the vehicle CR is equipped with one power receiving resonance circuit 210. However, the vehicle CR may be equipped with two or more power receiving resonance circuits 210. In this case, the receiver's local-area communication unit 270 is preferably positioned near the power reception coil 212 located at the front of the vehicle CR in the direction of travel. By positioning the receiver's local-area communication unit 270 at the front of the vehicle CR, it is possible to provide early local-area communication to the power transmission device 100 while the vehicle CR is travelling. Therefore, it is possible to suppress or prevent a delay in energizing the edge coil 112P of the power transmission device 100 due to, for example, a delay in local-area communication.

(E6) The above embodiment shows an example that the adjacent coil characteristic detecting unit 184 is a current sensor 322 for detecting the current value flowing in the adjacent coil 112Q. However, as the coil voltage applied to the edge coil 112P varies in the same way as the coil current, the adjacent coil characteristic detecting unit 184 may be a voltage sensor 322 for detecting the voltage applied to the adjacent coil 112Q. The adjacent coil characteristic detecting unit 184 may also be a magnetic flux detecting element such as a magnetic sensor or coil that detects the magnetic field (magnetic flux) in the vicinity of the edge coil 112P. In a case that the power transmission device 100 is not equipped with the adjacent resonance switching unit 126Q, the adjacent coil characteristic detecting unit 184 may be a voltage sensor for detecting voltage changes in the adjacent resonance capacitor 116Q. In a case that the adjacent resonance capacitor 116Q is not equipped with the adjacent resonance switching unit 126Q and a current flow through the adjacent resonance capacitor 116Q, a voltage corresponding to the current (charged charge) is generated in the adjacent resonance capacitor 116Q. In this case, the adjacent transmission control unit 182, using the voltage generated in the adjacent coil 112Q , can determine whether the adjacent coil 112Q is in a state where it can magnetically couple with the power reception coil 212 and control the on and off state of the adjacent current switching unit 124Q and the adjacent resonance switching unit 126Q.

(E7) In the above embodiment, an example that the edge coil unit 120P and the plurality of adjacent coil units 120Q are continuously laid in a straight line along the direction of travel (X-axis direction) of the vehicle CR on the vehicle travel path RS, thereby forming one transmission area SC1 arranged in a straight line, is shown. However, the edge coil unit 120P and the plurality of adjacent coil units 120Q are not limited to a straight line, for example, in addition to a straight line along the direction of travel of the vehicle CR, they are also arranged in a direction that intersects the direction of travel of the vehicle CR on the vehicle travel path RS, i.e., in the width direction (Y-axis direction) of the vehicle CR. By this configuration, one transmission area SC1 can be formed, arranged in a substantially planar shape. The number of coil units included in transmission area SC1 is not limited to four but may be any number equal to or more than two.

In the above example that the edge coil units 120P and the plurality of adjacent coil units 120Q are further laid along the width direction (Y-axis direction) of the vehicle CR to form one transmission area a SC1, "the coil unit positioned at the edge of the transmission area SC1" means a coil unit positioned at peripheral part of the rectangular shaped transmission area SC1. In this case, by installing the edge transmission control device 170 in the edge coil 112P positioned at the peripheral part of the rectangular shaped transmission area SC1, it is possible to switch the edge coil 112P to be a state able to feed power reliably, for cases that there are multiple directions that vehicle CR can enter for transmission area SC1 such as lane changing, turning, or crossing.

(E8) In the above embodiments, an example that the edge coil 112P transmit power to the receiving coil 212 is shown, however in a case that the power transmission device 100 and the power receiving device 200 are equipped with other resonance coils such as relay coils used for power transferring from the power transmission device 100 to the power receiving device 200, the edge transmission control unit 174 and the adjacent transmission control unit 182 can be function as switching units that switch the resonance state of the other resonance coils.

(E9) In each of the above embodiments, an example that the transmission area SC2 similarly configured to the transmission area SC1 is provided at a position separated from the transmission area SC1 by a predetermined distance is shown. In this case, the transmission request signal receiving unit provided to the transmission area SC1, and the transmission request signal receiving unit provided to the transmission area SC2 may be positioned separately. The distance to be separated is preferably set at a distance longer than the communication distance of the local-area communication. "The other transmission area adjacent to one transmission area" is not limited to the case where they are adjacent along the direction of travel of the vehicle CR shown in Figure 1, but also includes the case where the vehicle travel way RS is equipped with multiple lanes that share the same travel direction. In the case where the vehicle travel way RS has multiple lanes that share the same travel direction, the transmission area provided in the other lane that adjoins the vehicle travel way RS may be included, and the transmission area provided in the opposite lane that adjoins the vehicle travel way RS may also be included. By this configuration of the power transmission device 100, it is possible to suppress or prevent problems of the small-area communication interference between multiple transmission areas SC1 and SC2.

(E10) In the above first embodiment, an example that the adjacent transmission control unit 182 performs the adjacent transmission operation in step S242 and then when the adjacent coil current value is less than the second characteristic value CV2, the adjacent transmission control unit 182 performs the adjacent transmission suspend operation after a predetermined period has elapsed from the time when the adjacent transmission operation was performed, is shown. However, the adjacent transmission control unit 182 may perform the adjacent transmission suspend operation after a predetermined period has elapsed from the time when the adjacent transmission operation was performed. In this case, the predetermined period is set, for example, using an estimated time, , such as a time that elapses before the vehicle CR passes through the transmission area SC1 at normal vehicle speed, for the power supply to be executed after the start of the adjacent transmission operation for the moving power receiving device 200. By this configuration, the adjacent transmission suspend operation can be performed without checking the adjacent coil current value. Therefore, the adjacent coil characteristic detecting unit 184 can be omitted or the processing of the adjacent transmission control unit 182 can be simplified. This configuration can be applied to edge coil energizing operation as well.

(E11) In each of the above embodiments, an example that the transmission circuit control unit 192 drives the transmission circuit 130 when the transmitter's wide-area communication unit 190 receives a wide-area communication signal is received by the transmitter's wide-area communication unit 190 is shown. However, for example, when the standby state of the power transmission device 100 can be omitted, the transmission circuit control unit 192 may drive the transmission circuit 130 when the receiving unit 172 receives the edge transmission request signal. By this configuration of the power transmission device 100, as the wide-area communication is not performed, processing can be simplified and the period for driving transmission circuit 130 can be closed.

(E12) In each of the above embodiments, an example that the edge coil unit 120P is equipped with both the edge current switching unit 124P and the edge resonance switching unit 126P, and the adjacent coil unit 120Q is equipped with both the adjacent current switching unit 124Q and the adjacent resonance switching unit 126Q is shown. However, at least one of the edge resonance switching units 126P and the adjacent resonance switching unit 126Q can be omitted.

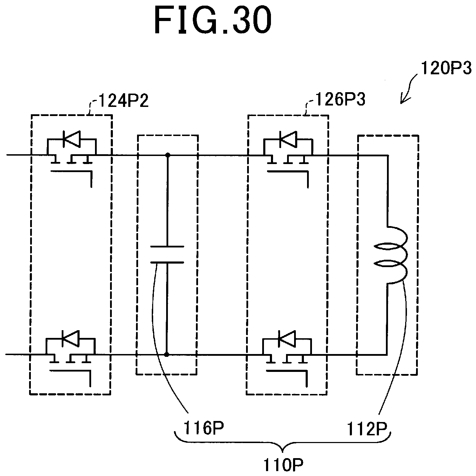

(E13) In the first embodiment above, as shown in Figs. 3 and 4, a two-way switch as edge resonance switching unit 126P is positioned between edge resonance capacitor 116P and the edge coil 112P and connected in parallel to edge coil 112P is shown. However, an edge resonance switching unit 126P3 may be provided, as in the edge coil unit 120P3 shown in Figure 30, in which the two-way switches are arranged separately on the positive and negative pole sides. By this configuration of power transmission device 100, by switching the edge resonance switching unit 126P3 open (off), the edge coil 112P and the edge resonance capacitor 116P are made conductive. The edge resonance circuit 110P can be set to a non-resonance state by opening (turning off) the edge coil 112P and the edge resonance capacitor 116P.

The present disclosure is not limited to the embodiments described above but can be realized in various configurations to the extent that the intent is not departed from. For example, the technical features in the embodiments corresponding to the technical features in the forms described in the Summary of the Invention section can be replaced or combined as appropriate to solve some or all of the above issues or to achieve some or all of the above effects. Also, if the technical feature is not described as essential in the specification, it can be deleted as appropriate.

The control unit and methods described in this disclosure may be realized by a dedicated computer provided by configuring a processor and memory programmed to perform one or more functions embodied by a computer program. Alternatively, the control unit and the method described in this disclosure may be realized by a dedicated computer provided by configuring a processor with one or more dedicated hardware logic circuits. Alternatively, the control unit and the method described in this disclosure may be realized by one or more dedicated computers provided by a combination of one or more processors and memories programmed to hardware The computer program may also be stored in a computer-readable non-transitory recording medium as instructions to be executed by the computer.

## Claims

1. A power transmission device (100, 100b, 100d) for wireless power supply to a mobile power receiving device (200), the power transmission device comprising:
an edge coil unit (120P, 120P2, 120P3, 120Pd to 120Pd5) that includes: an edge resonance circuit (110P, 110Pd-110Pd, 110Pe); the edge resonance circuit including an edge coil (112P) and an edge resonance capacitor (116P, 116P2, 116P3, 316P) for parallel resonance of the edge coil; and an edge current switching unit (124P, 124P2) for switching on and off state of power supply from a power source to the edge resonance circuit;
an edge transmission request signal receiving unit (172) that receives an edge transmission request signal for initiating transmission by the edge coil unit;
an edge transmission control unit (174) that controls, in accordance with the edge transmission request signal, the on and off state of the power supply from the power source to the edge resonance circuit by the edge current switching unit;
an adjacent coil unit (120Q, 120Qb) that is adjacent to the edge coil unit and includes: an adjacent resonance circuit (110Q), the adjacent resonance circuit including an adjacent coil (112Q) and an adjacent resonance capacitor (116Q) for parallel resonance of the adjacent coil; and an adjacent current switching unit (124Q) for switching on and off state of the power supply from the power source to the adjacent resonance circuit; and
an adjacent transmission control unit (182) that controls the on and off state of the power supply from the power source to the adjacent resonance circuit using the adjacent current switching unit.

2. The power transmission device according to claim 1, wherein
the edge coil unit includes an edge resonance switching unit (126P) that switches a state of the edge coil and the edge resonance capacitor between a resonance state and a non-resonance state by changing impedance of the edge coil and the edge resonance capacitor, and
the edge transmission control unit further performs, in accordance with the edge transmission request signal, switching the state of the edge coil between the resonance state and the non-resonance state by the edge resonance switching unit.

3. The power transmission device according to claim 2, wherein
the edge resonance circuit further includes an edge in-series capacitor positioned between the edge coil and the edge resonance capacitor and connected in series with the edge coil,
the edge in-series capacitor, together with the edge resonance capacitor, makes the edge coil parallel resonate.

4. The power transmission device according to claim 3, wherein
the edge resonance switching unit is positioned between the edge resonance capacitor and the edge in-series capacitor and is connected to the edge coil in parallel.

5. The power transmission device according to claim 3, wherein
the edge resonance switching unit is a two-way switch including two semiconductor devices, and is positioned between the edge resonance capacitor and the edge coil, and
one device of the two semiconductor devices is connected to the positive pole and the other device of the two semiconductor devices is connected to the negative pole.

6. The power transmission device according to claim 3, wherein
the edge resonance switching unit is positioned between the edge in-series capacitor and the edge coil and is connected to the edge coil in parallel.

7. The power transmission device according to claim 3, wherein
the edge resonance switching unit is connected in parallel to the edge in-series capacitor.

8. The power transmission device according to claim 3, wherein
the edge resonance switching unit is positioned between the edge resonance capacitor and the edge coil and is connected in series with the edge resonance capacitor.

9. The power transmission device according to any one of claims 2 to 8, wherein
the edge transmission control unit performs, when the edge transmission request signal receiving unit receives the edge transmission request signal, power supplying from the power source to the edge resonance circuit by controlling the edge current switching unit and an edge transmission operation to switch the edge coil and the edge resonance capacitor to the resonance state by controlling the edge resonance switching unit.

10. The power transmission device according to claim 9, wherein
the edge coil unit further includes an edge current sensor (122P) that detects an edge current value of the power supplied from the power source to the edge resonance circuit, and
the edge transmission control unit, when the edge current value is equal to or less than a predetermined threshold value (TH1), performs an edge transmission suspend operation to suspend the power supply from the power source to the edge resonance circuit by controlling the edge current switching unit and switches the edge coil and the edge resonance capacitor to the non-resonance state by controlling the edge resonance switching unit.

11. The power transmission device according to claim 10, wherein
the edge transmission control unit, when performing the edge transmission suspend operation, switches the edge coil and the edge resonance capacitor to the non-resonance state by controlling the edge resonance switching unit after suspending the power supply from the power source to the edge resonance circuit by controlling the edge current switching unit.

12. The power transmission device according to claim 1, wherein
the adjacent coil unit includes an adjacent resonance switching unit (126Q) controlled by the adjacent transmission control unit, the adjacent resonance switching unit switching the state the state of the adjacent coil and the adjacent resonance capacitor between the resonance state and the non-resonance state by changing the impedance of the adjacent coil and the adjacent resonance capacitor.

13. The power transmission device according to claim 12, wherein
the adjacent resonance circuit further includes an adjacent in-series capacitor positioned between the adjacent coil and the adjacent resonance capacitor and connected in series with the adjacent coil,
the adjacent in-series capacitor, together with the adjacent resonance capacitor, makes the adjacent coil parallel resonance.

14. The power transmission device according to claims 12 or 13,
further comprising an adjacent coil characteristic detecting unit (184) that detects changes in an electrical characteristic value of the adjacent coil, the electrical characteristic value of the adjacent coil being one of a voltage applied to the adjacent coil, a current flowing through the adjacent coil, a magnetic field generated in the adjacent coil, and a voltage generated in the adjacent resonance capacitor, and
wherein the adjacent transmission control unit, when the electrical characteristic value is equal to or greater than a predetermined first characteristic value (CV1), performs an adjacent transmission operation to supply power from the power source to the adjacent resonance circuit by controlling the adjacent current switching unit and switch the adjacent coil and the adjacent resonance capacitor to the resonance state by controlling of the adjacent resonance switching unit.

15. The power transmission device according to claim 14, wherein
the adjacent coil unit further includes an adjacent current sensor (122Q) that detects an adjacent current value of the power supplied from the power source to the adjacent resonance circuit, and
the adjacent transmission control unit, when the adjacent current value is equal to or less than a predetermined threshold value (TH2), performs an adjacent transmission suspend operation to suspend the power supply from the power source to the adjacent resonance circuit by controlling the adjacent current switching unit and switch the adjacent coil and the adjacent resonance capacitor to the non-resonance state.

16. The power transmission device according to claim 15, wherein
the adjacent transmission control unit, when performing the adjacent transmission suspend operation, switches the adjacent coil and the adjacent resonance capacitor to the non-resonance state by controlling the adjacent resonance switching unit after suspending the power supply from the power source to the adjacent resonance circuit by controlling the adjacent current switching unit.

17. The power transmission device according to claim 15, wherein
the adjacent transmission control unit, in a case that the electrical characteristic value is less than a predetermined second characteristic value (CV2) after executing the adjacent transmission operation, the predetermined second characteristic value being higher than the first characteristic value, performs the adjacent transmission suspend operation when a predetermined period has elapsed from the start time of the adjacent transmission operation.

18. The power transmission device according to claim 15, wherein
the adjacent transmission control unit performs the adjacent transmission suspend operation when a predetermined period has elapsed from the start time of the adjacent transmission operation.

19. The power transmission device according to claims 12 or claim 13,
further comprising an adjacent transmission request signal receiving unit (186) that receives an adjacent transmission request signal to initiate transmission by the adjacent coil unit, and
wherein the adjacent transmission control unit, when the adjacent transmission request signal receiving unit receives the adjacent transmission request signal, performs the adjacent transmission operation to supply power from the power source to the adjacent resonance circuit by the controlling the adjacent current switching unit and switch the adjacent coil and the adjacent resonance capacitor to the resonance state by controlling the adjacent resonance switching unit.

20. The power transmission device according to claim 19,
further comprising an adjacent transmission request signal transmitting unit (176) that transmits the adjacent transmission request signal, and
wherein the adjacent transmission request signal transmitting unit transmits the adjacent transmission request signal to the adjacent transmission request signal receiving unit when transmission by the edge coil unit is initiated.

21. The power transmission device according to claim 9,
further comprising: an edge transmission suspend request signal transmitting unit (186) that transmits an edge transmission suspend request signal to suspend power transmission by the edge coil unit; and
an edge transmission suspend request signal receiving unit (176) that receives the edge transmission suspend request signal, and
wherein the edge transmission control unit performs, when the edge transmission suspend request signal receiving unit receives the edge transmission suspend request signal, an edge transmission suspend operation to suspend the power supply from the power source to the edge resonance circuit by controlling the edge current switching unit and switch the edge coil and the edge resonance capacitor to the non-resonance state by controlling the edge resonance switching unit.

22. The power transmission device according to claim 21, wherein
the adjacent coil unit further includes an adjacent resonance switching unit (126Q) controlled by the adjacent transmission control unit, the adjacent resonance switching unit switching the state of the adjacent coil and the adjacent resonance capacitor between the resonance state and the non-resonance state by changing the impedance of the adjacent coil and the adjacent resonance capacitor, and
the edge transmission control unit performs, when the edge transmission suspend request signal receiving unit receives the edge transmission suspend request signal, an adjacent transmission suspend operation to suspend the power supply from the power source to the adjacent resonance circuit by controlling the adjacent current switching unit and switch the adjacent coil and the adjacent resonance capacitor to the non-resonance state by controlling the adjacent resonance switching unit.

23. The power transmission device according to claim 9,
further comprising: an edge transmission suspend request signal transmitting unit (186) that transmits an edge transmission suspend request signal to suspend power transmission by the edge coil unit;
an edge transmission suspend request signal receiving unit (176) that receives the edge transmission suspend request signal; and
a transmission circuit (130) controlled by the edge transmission control unit, the transmission circuit supplying AC power to the edge coil unit and the adjacent coil unit, and
wherein the edge transmission control unit suspends the transmission circuit 130 when the edge transmission suspend request signal receiving unit receives the edge transmission suspend request signal.

24. The power transmission device according to claim 1, wherein
the edge transmission request signal receiving unit receives the edge transmission request signal which is a small-area communication signal with a communication distance of 5 meters or less.

25. The power transmission device according to claim 24,
further comprising: a transmission circuit (130) that supplies AC power to the edge coil unit and the adjacent coil unit; and
a transmission circuit control unit (192) that drives the transmission circuit, and wherein the transmission circuit control unit drives the transmission circuit when the edge transmission request signal receiving unit receives the edge transmission request signal.

26. The power transmission device according to claim 1,
further comprising a transmission circuit (130) that supplies AC power to the edge coil unit and the adjacent coil unit;
a transmission circuit control unit (192) that drives the transmission circuit; and
a wide-area communication unit (190) that receives a wide-area communication signal with a communication distance longer than 5 meters, and
wherein the transmission circuit control unit drives the transmission circuit when the wide-area communication unit receives the wide-area communication signal.

27. A wireless power transferring system, comprising:
The power transmission device according to claim 1; and
a power receiving device including a transmission request signal transmitter (270) that transmits the edge transmission request signal.

28. A program to be executed by a computer equipped with a power transmission device (100, 100b, 100d) for wireless power supply to a mobile power receiving device (200), the program causing the computer to:
receive an edge transmission request signal to initiate transmission by an edge coil unit (120P, 120P2, 120P3, 120Pb, 120Pd to 120Pd5),
control on and off state of the power supply from the power source to an edge resonance circuit in accordance with the edge transmission request signal,
control on and off state of the power supply from the power source to the adjacent resonance circuit of an adjacent coil unit (120Q, 120Qb) that is adjacent to the edge coil unit.
